# EUROPEAN PATENT SPECIFICATION

(11) **EP 1 873 656 B1**
(45) Date of publication and mention of the grant of the patent: **20.06.2012**
(21) Application number: 06115926.5
(22) Date of filing: 22.06.2006
(51) Int. Cl.: G06F 17/30

(54) **Facilitating access to application data at an application server by a wireless communication device**
Zugriff auf Anwendungsdaten bei einem Anwendungsserver mittels drahtloser Kommunikationsvorrichtung
Faciliter l'accès aux données d'application sur un serveur d'application par un dispositif de communication sans fil

(43) Date of publication of application: 02.01.2008
(73) Proprietor: Research In Motion Limited, Waterloo, ON N2L 3W8 (CA)
(72) Inventor: Neil, Tim, Mississauga Ontario L5M 7H2 (CA); Neil, Scott, Toronto Ontario M5V 3R7 (CA); Grenier, Steve, Georgetown Ontario L7G 5V7 (CA)
(74) Representative: MERH-IP Matias Erny Reichl Hoffmann

(56) References cited:
- US-A1- 2004 093 217
- US-A1- 2004 254 855
- US-A1- 2005 203 918

## Description

This invention relates to an approach to facilitate access to application data at an application server by a wireless communication device.

To enable an application on an application server to provide requested data to a wireless communication device, such as a Research in Motion (RIM) two-way paging device, a WinCE-based device, a PalmOS device, a WAP-enabled wireless communication device telephone, or the like, the application could be modified to parse received messages originating from the wireless communication device, trigger appropriate processing internally to the application, and generate any necessary message(s) in response. This approach may require the existing application programming interface (API) to be modified to provide exposed routines (i.e. routines that are invokable from another computing device such as an intermediary transaction server) conforming to a predefined interface. The interface may require predetermined routine names and parameter names to be used, so that software executing at the intermediary transaction server can "hard code" invocations of these routines in order to pass along data from messages originating from the wireless communication device. Alternatively, a wrapper application could be written and executed at the application server. The wrapper application could parse messages received from wireless communication devices and make appropriate API calls, passing information from the messages as parameters. In either approach, if the burden of making the needed modifications falls upon an integrator who is not the application provider, implementation may disadvantageously be slowed by the integrator's unfamiliarity with the API of the application.

US2004/254855 discloses an XML document with a markup language element and subordinate attributes specifying product information for use in a shopping basket system may be invoked via a graphical image, such as an icon, on a web browser or a desktop of the client computer.

### GENERAL

It is desirable to facilitate access to application data at an application server log a wireless communication device.

The subject matter of the independent claims may be used to facilitate such access to application data. Various embodiments are defined in dependent claims.

### BRIEF DESCRIPTION OF THE DRAWINGS

In the figures which illustrate an example embodiment of the invention,

FIG. 1 is a schematic view of a system suited for use of an embodiment of the subject invention;

FIG. 2 is a schematic view of a rapid application development tool component of FIG. 1 configured in accordance with this invention;

FIGS. 3A and 3B illustrate an exemplary XML document in accordance with an embodiment of this invention;

FIGS. 4A-4C illustrate a portion of the graphical user interface of the rapid application development tool of FIG. 2;

FIGS. 5A and 5B illustrate an exemplary XML document in accordance with an embodiment of this invention;

FIG. 6 is an example XML package from a wireless communication device;

FIGS. 7A-7C contain pseudocode of object-oriented classes instantiated at the transaction server of FIG. 2; and

FIG. 8 contains pseudocode of an object-oriented class forming part of a connector library at the transaction server of FIG. 2.

### DESCRIPTION OF PREFERRED EMBODIMENT

Communications between a wireless communication device and an application on an application server may pass through a transaction server. In United States-Patent Application 2003/0060896 to Hulai et at published March 27, 2003, an approach is described whereby a definition file for each available application is created and stored on the transaction server (referred to as a "middleware server" in Hulai et al.), This so-called "application definition file" may be written in a markup language such as Extensible Markup Language (XML). The XML elements and attributes in the definition file may dictate the user interface at the wireless communication device, the format of messages exchanged with the transaction server and server-side application, and a format for storing application-related data at the device. The XML element and attributes in the application definition file may be as described in Appendix "A" of the above-noted publication, for example.

Hulai et al. contemplate intercommunication between the application and multiple wireless computing devices of various types executing distinct operating systems such as the RIM operating system, Windows CB, or the Palm OS.

Each wireless communication device in communication with the transaction server is provided with virtual machine ("VM") software to interpret and "execute" the definition files. The VM software varies depending upon the operating system of the wireless communication device. When a wireless communication device wishes to use an application for the first time, it downloads the application definition file for the application from the transaction server. The application definition file controls the screen display at the wireless communication device, including the display of application data at the device, and the nature of possible user inputs, such as through displayed entry fields. When a wireless communication device user inputs information, a package (message) containing this information in a format that accords with a format defined in the definition file may be created and sent to the transaction server. The transaction server passes such packages to the application server. This approach has the advantage that information is received by the application in a consistent format from various wireless computing devices, regardless of the operating system of the device.

To facilitate construction of the definition files, a rapid application development (RAD) tool may be employed. A RAD tool may be programmed computer providing an intuitive graphical user interface (GUI) that facilitates "drag and drop" application development, so that even those who lack depth of expertise in software development or markup languages may create definition files. Using the RAD tool, an integrator may create a hierarchy of graphical icons from a predetermined set of available icons. Icons generally correspond to XML elements representative of various wireless communication device application programming constructs, such as tables for storing data, messages to be sent to the transaction server, user interface screens, user interface screen components (e.g. widgets), actions to be performed upon the occurrence of specified events, and so forth. Each type of icon may have properties, corresponding to attributes of the corresponding XML element, that may be viewed and set by a user through the GUI. The structure of a created hierarchy of graphical icons, in terms of which icons are contained by (or are "children of") which other icons, may be limited by the permissible containment (i.e. parent - child) relationships between the various represented XML elements, as dictated by an applicable XML schema. As a developer develops the wireless communication device application, the tool 116 automatically generates the corresponding XML. Use of the RAD tool in this fashion may prevent the integrator from having to manually develop definition files, which, although possible, would burden the integrator with learning the details of the applicable XML schema and with generating a valid and well-formed markup language document. The RAD tool may be implemented within a generic integrated design environment (IDE) framework such as the Eclipse framework.

The subject embodiment utilises aspects of this approach to handling communications with wireless communication devices in a new approach, effected largely at the transaction server, for handling wireless computing device communications with the application on the application server.

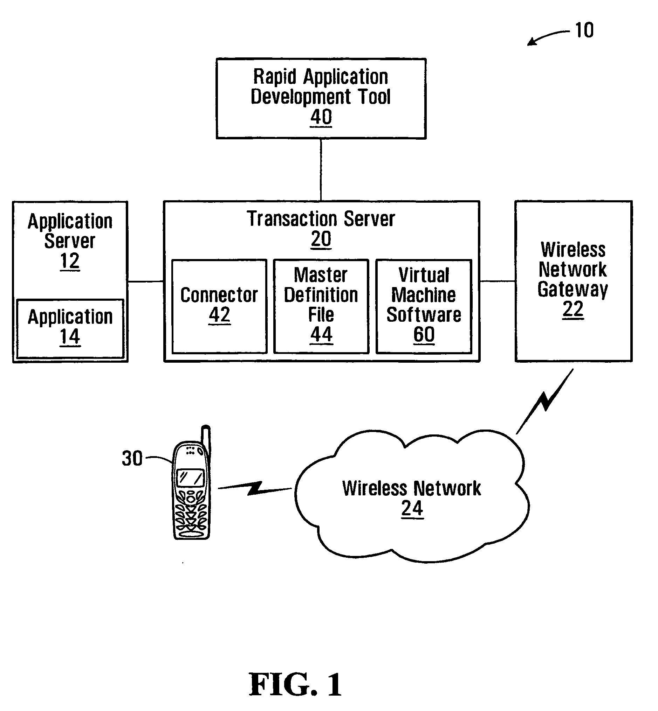

FIG. 1 illustrates a system suited for use with an embodiment of the subject invention. System 10 has an application server 12 with an application 14. The application server 12 is connected to a transaction server 20 which, in turn, is connected to a wireless network gateway 22. The connection between transaction server 20 and each of application server 12 and wireless gateway 22 may be by way of a data network (not illustrated), such as the Internet and may use HTTP running on top of a standard TCP/IP stack for example. The wireless network gateway 22 connects to a wireless network 24 as does a wireless communications device 30. Device 30 may be of the type described in U.S. Patent No. 6,396,482 issued May 28, 2002 to Griffin, the contents of which are incorporated by reference herein. As such, the device may have a processor operatively connected to a transceiver, a display, a memory, and a user interface. A RAD tool 40 may also connect to the transaction server.

In overview, with reference to FIG. 1, rather than changing the application 14 or adding a wrapper to the application 14, the integrator causes virtual machine software 60 at the transaction server 20 to parse incoming messages from the wireless communication device 30, pass message data to the application 14, and return any results from the application 14, via a connector 42 that is deployed at the transaction server 20. The connector is a set of electronic files which effectively define a new API providing convenient access to the application 14 at the transaction server 20. The integrator supplies a markup language document 44, referred to as a "master definition file", to the transaction server 20 which effectively configures the virtual machine software 60 to parse the incoming messages and pass parsed data to the application 14 via the new API provided by the connector. Creation of the master definition file 44 may be facilitated by a rapid application development (RAD) tool 40.

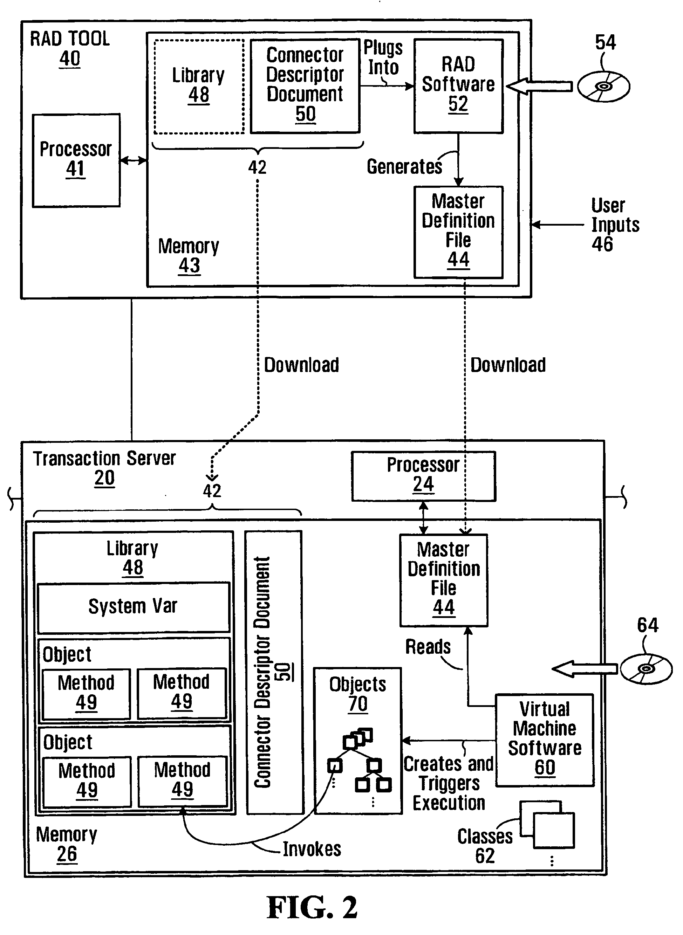

FIG. 2 illustrates the transaction server 20 and RAD tool 40 of FIG. 1 in greater detail. Examining transaction server 20, it can be seen that the server contains a conventional processor 24 interconnected with memory 26. Memory 26 stores the connector 42, master definition file 44, and virtual machine software 60. In addition, memory 26 stores object-oriented classes 62 and objects 70. Virtual machine software 60 and classes 62 may be loaded from a machine-readable medium such as an optical disk 64.

As shown, in FIG. 2, the connector 42 has two components, namely, a library 48 and a connector descriptor document 50. Both of these components are authored by a "connector provider", who is either the application provider or another party with detailed knowledge of the application 14.

Library 48 is a set of one or more electronic files containing precompiled routines 49 for accessing the application 14. The routines effectively define a new API, intended for use at the transaction server 20, that becomes the "face" of application 14 from the perspective of other, calling code at the transaction server-specifically, virtual machine software 60 (described below). Routines 49 are written so as to provide useful or convenient mechanisms for "mobilizing the application", i.e. for causing the application to become accessible by wireless communication device 30. In the present embodiment, the routines 49 take the form of methods defined within object-oriented classes. Specifically, the library 48 is a .NET assembly file (having the extension ".dll") comprising byte code that was generated by compiling source code written in an object-oriented programming language such as C# or Java for example. The routines 49 include calls to the legacy API of the application 14 and may include logic which "massages" returned data from the application into a form that is useful for "mobilizing" the application. The legacy API calls may employ such technologies as the Simple Object Access Protocol (SOAP) or Distributed Common Object Model (DCOM) for example, which are known in the art.

As noted, routines 49 are written in contemplation of, and in support of, application mobilization. This may be contrasted against the application's legacy API, which may not contemplate presentation of the application at a wireless communication device at all. Thus, if the application 14 were an email application, a library routine may invoke a legacy API function which returns all email messages of a user's inbox, and may then provide a subset of those messages, say, fifteen email messages at a time upon each subsequent invocation. This may be useful for mobilizing an email application given that a typical wireless communication device display may only be able to list about fifteen messages at once, due to size constraints. As another example, if a wireless communication device application is to present two categories of data on its screens (e.g. user surname and financial information) a library method could, when invoked, call a first legacy API function with certain parameters (e.g. an account number) and receive a return result falling within the first category (account holder surname), use the return result to invoke a second legacy API function and receive a return result in the second category (financial information), and further use both return results in formulating a customized return result (surname with financial information) that is convenient for presentation at the wireless communication device.

As should be apparent from the above, the library routines 49 effectively shield an integrator who is tasked with mobilizing an application from the legacy API, which may be confusing or ill-suited for use in accessing application data for presentation at a wireless communication device, and provides in its place a new API, to be invoked at run-time, which is better suited to application mobilization. The integrator need only invoke the methods of the new, better-suited API in order to gain access to the application 14. The integrator need not understand how the library routines 49 achieve their result.

The second component of connector 42 is a markup language document 50, referred to as a "connector descriptor" document, which describes the new API, i.e. describes the routines 49 in the library that are available for invocation at the transaction server 20. The connector descriptor document 50 may also describe other aspects of the library 48 (e.g. system variables). The connector descriptor document 50 is written in a markup language, such as Extensible Markup Language (XML), to facilitate its parsing and usage at run type by the virtual machine software 60. The information in the connector descriptor document 50 facilitates the invocation of library methods 49 by the virtual machine software 60.

The relationship between a connector 42 and an application 14 is typically (but not necessarily) one-to-one. Thus if access to two applications was desired, two connectors may be used. The present embodiment seeks access to only one application 14, thus only one connector 42 is provided. The connector 42 may also be referred to as a data source or a "plug-in". The latter term is based on the fact that the connector descriptor document 50 portion of the connector 42 can also be "plugged into" the RAD tool 40 to configure the tool 40 for generation of a master definition file 44, as will be described.

The master definition file 44 is a hierarchy of XML elements which effectively "encode" the manner in which the virtual machine software 60 at the transaction server 20 should: parse incoming XML packages from the wireless communication device 30; invoke library routines 49 to pass parsed message data to the application 14; and send response messages (also XML packages) back the wireless communication device 30. The XML elements of the master definition file can be used to define "business logic" for execution at the transaction server 20, in support of mobilizing the application. For example, certain XML elements can be used to define if-then-else logic which results in the run-time invocation of two different library methods 49 (in the alternative) based on an ascertained value of a field in an XML package. The virtual machine software 60 interprets these XML elements and generates a like hierarchy of object instances 70 at run time in the memory of the transaction server 20. The relationship between an XML element and an object instance is generally one-to-one. The object instances 70 are instantiated from a set of object classes 62 stored in memory 26. Each object 70 has data members that are populated with the values of the XML attributes associated with the corresponding XML element in order to "customize" the object for effecting the desired operation. The master definition file 44 is generated by the integrator, with knowledge of: (1) the format of wireless communication device packages expected to be received at transaction server 20; and (2) the new application API (i.e. exposted library methods 49) as described by the connector descriptor document 50. When the master definition file 44 is deployed to the transaction server 20 along with the connector 42, and the virtual machine software 60 is invoked, the desired operation will be initiated. The XML may be in accordance with the XML 1.1 W3C Recommendation, 4th February 2004, François Yergeau et al. (edited in place 15 April 2004), provided at www.w3.org/TR/2004/REC-xml11-20040204/, the contents of which are hereby incorporated by reference hereinto.

To facilitate creation of connector 42, the author of the virtual machine software 60 may publish interfaces (e.g. C# or Java interfaces) indicating types of objects (classes) and methods that need to be implemented within the library 48 in order for the virtual machine software 60 to be able to use the library 48 to access the application 14. For example, there may be an interface for a connector object, a looping object, and a system variable object, each of which is described below.

The connector object (not to be confused with connector 42) may contain properties representing information necessary to connect to a back-end application (e.g. usemame, password, and path member fields) and may require implementation of a "connect" method for establishing a connection to the application. The connector object may implement the following exemplary interface (shown in the C# programming language):

```
  public interface Connector
  {
  bool Connect (string value) ;
  bool Isconnected ();
  bool Disconnect ();
  }
```

The looping object represents an array or set of objects returned by the application 14 and may require implementation of methods to facilitate processing these objects one by one, such as: a method to indicate the first object in the array or set ("beginning of the file"); a method to indicate the last object in the array or set ("end of the file"); a method to move to the next object; a method to move to the previous object; a method to move to the first object; and a method to move to the last object. A looping object may also expose ad-hoc functions such as a function that returns a scratchpad Value or a function that returns looping object. The looping object may implement the following exemplary interface:

```
  public interface LoopingObject
  {
  bool BOF ( ) ;
  bool EOF ( ) ;
  void MoveFirst ( ) ;
  void MoveNext ( ) ;
  void MoveLast ( ) ;
  void MovePrev ( ) ;
  }
```

A system variable object would allow the integrator to define a system variable (i.e. a variable defined within library 48) that could be accessed or set from the virtual machine software 60 at run time. System variables could represent a username, password, and operating system path to the application at the application server, or other variables that may be useful in connection to application 14. The system variable object may implement the following exemplary interface.

```
  public interface variable
  {
  void SetValue(object value);
  object Getvalue ( ) ;
  }
```

Implementations of each of these types of objects may of course define methods not required by the interface.

To facilitate creation of a master definition file 44, the afore-referenced RAD tool 40 could be used. RAD tool 40 may be a computer having a processor 41 connected to memory 43 (FIG.2). The memory 43 stores the RAD software 52 which may be loaded for execution from a machine-readable medium such as an optical disk 54.

Execution of the RAD software 52 causes, RAD tool 40 to present a GUI which allows a user (the integrator) to enter user inputs 46 for defining a hierarchy of icons representing operation at the transaction server 20. The hierarchy governs the run-time operation of virtual machine software 60 in parsing XML packages from device 30, invoking methods 49, and sending return results in other XML packages to device 30. RAD software 52 is pre-programmed (e.g. as loaded from optical disk 54) to make available within the RAD tool GUI certain "default" icons that may be used (added to a hierarchy of icons) regardless of the nature of the connector(s) to be employed to access the application 14. Such icons may for example represent such program constructs as table definitions defining local tables for storing application-related data or package definitions defining messages to be received from and sent to wireless communication device 30 or ACTION constructs as described in Appendix "A".

Beyond being pre-programmed to provide default icons the RAD tool 40 is further configured with the connector descriptor document 50 "plug-in" to make the tool 40 aware of the objects (and invokable methods thereof) of connector 42. The plug-in causes new selectable options to appear within the GUI of RAD tool 40 that are specific to the connector 42. For example, an ACTION icon may have a new type representing the invocation of a specific method 49 of a particular class defined in library 48. When this action type is selected, a list (e.g. in the form of a pull-down menu) may initially be presented which enumerates available objects (classes) defined in library 48. When an object is selected from the list, another list (e.g. another pull-down menu) may thereafter be displaying the methods 49 defined within the selected object that are capable of invocation from virtual machine software 60, as specified in the connector descriptor document 50. When one of the method names is selected from that list, the RAD tool GUI may further enumerate the parameters for that method in a further properties window pane, with an edit box next to each parameter for entry by the integrator of the parameter values. By selecting the method name and specifying which data (e.g. which field of which XML package from the wireless communications device 30) should be used as its parameters, the RAD tool user may cause XML elements and attributes for effecting an invocation of that method to become encoded in the resultant master definition file 44 that will ultimately be generated by the RAD tool 40. If the RAD tool 40 were configured with one (or more) different connector descriptor documents, different options (e.g. different objects, methods and parameters) may become available in the RAD tool GUI.

It will be appreciated that the RAD tool 40 does not use the library portion 48 of connector 42. Accordingly, this portion 48 need not actually be resident in memory 43 of RAD tool 40. To reflect this fact, the library 48 is indicated in memory 43 with a dashed border in FIG. 2.

The master definition file 44 and connector 42 are downloaded to the transaction server 20 prior to run time. At run time, the virtual machine software 60 at the transaction server 20 instantiates objects 70 based on the master definition file 44 and triggers execution of certain methods of the objects 70. The objects 70 essentially await the arrival of XML packages from the wireless communication device 30 and, upon their arrival (which is signaled by operating system callbacks into methods of certain objects 70), the objects 70 make appropriate calls to the methods 49. The objects 70 may dynamically link to the library 48 to make these calls possible. Instances of the classes defined in library 48 may be instantiated through use of an execution environment, such as a .NET framework (not shown), in conjunction with information from the connector description document 50, such as qualified name information for classes of the .NET assembly .dll file. In particular, by using reflection, the qualified name information may be used to create instances of the classes (objects) of the .NET assembly. The handles to these objects permit object methods 49 to be invoked. Thus, when an XML package arrives at the transaction server 20 from the wireless communication device 30, the instantiated objects 70 effectively parse the package into pieces, which are supplied to the application 14 via the instantiated library objects which effect the "new API" defined by connector 42. Similarly, any return result from the application 14 may trigger generation of a return XML package by objects 70, which package is sent to the device 30 to complete the transaction.

A simple example will help illustrate the foregoing. In the example, it is assumed that the application 14 on the application server 12 is an SQL database.

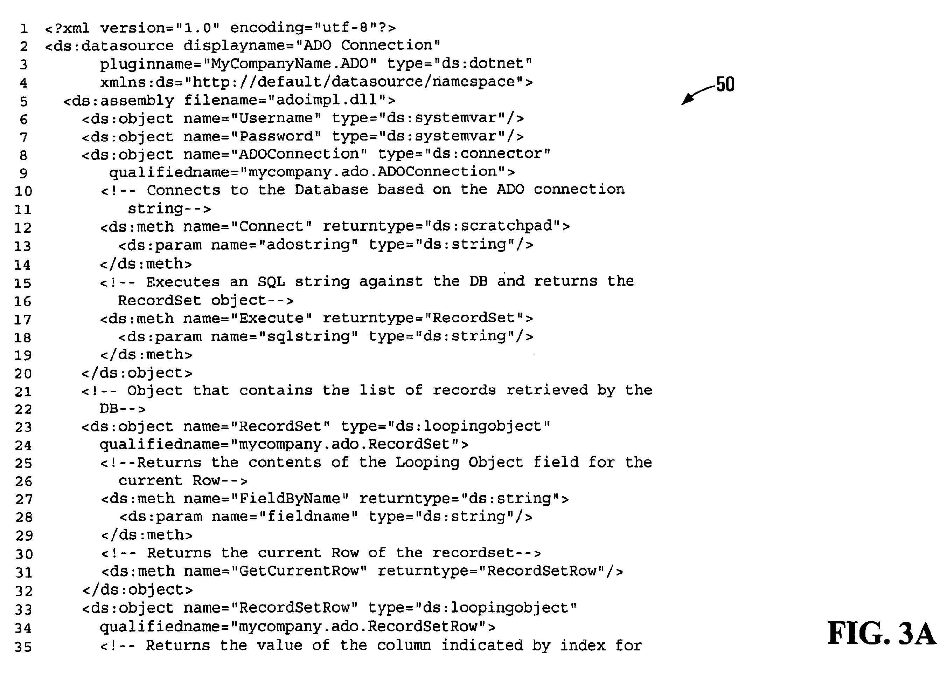

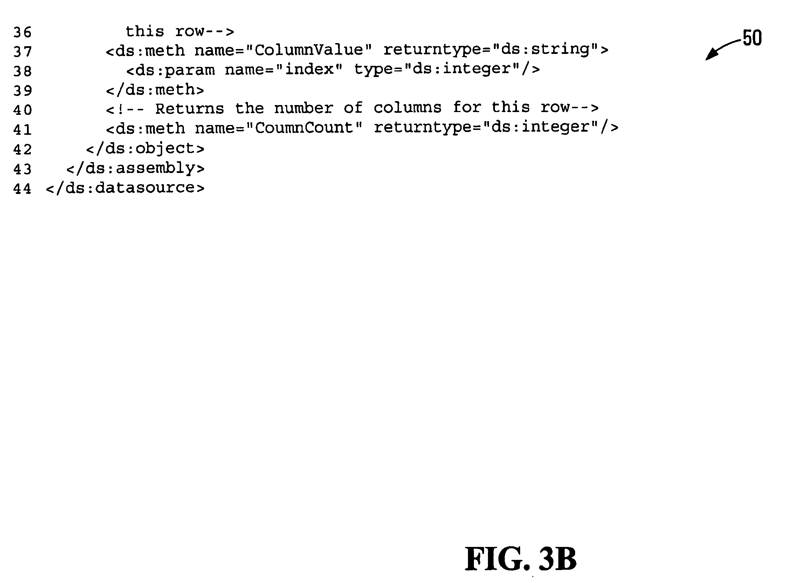

FIGS. 3A and 3B show a sample connector descriptor document 50, written in XML, which exposes functions of a custom API for connecting to and accessing an SQL database. The described connector provides an ADO-like connector to an SQL database. ActiveX Data Objects (ADO) is a Microsoft technology which provides a layer over a programming language (here SQL) to allow access to an SQL database with no knowledge of SQL. Further information concerning ADO is available at:
msdn.microsoft.comAibrary/default.asp?url=library/en-us/ado270/htm/dasdkadooverview.asp, the contents of which are incorporated by reference herein.

Turning to FIG. 3A, line 3 gives the connector descriptor document 50 the name "MyCompanyName.ADO". This name is referenced from the master definition file 44. The reference to document 50 within master definition file 44 permits the former document to be located at run time at the transaction server 20 by objects 70,which are formed based on the parsing of the file 44. The type attribute on line 3 indicates that the library 48 is a .NET assembly. Line 5 provides the name of the file representing library 48 so that it can be located at the time at the transaction server 20 by objects 70.

Lines 6 and 7 identifies the objects Username and Password as system variables. This indicates that the library 48 declares variables named Username and Password which can be set and read by objects 70 at run time.

Lines 8 to 20 declare an object named "ADOConnection" which implements the interface "Connector", as indicated by the type attribute. This declaration indicates that the library 48 defines a class named "ADOConnection" which implements the interface "Connector". The qualified name of the class, namely "mycompany.ado.ADOConnection", is indicated by the qualifiedname attribute. This attribute is used by a .NET framework at transaction server 20 (not illustrated) for purposes of identifying the correct class of the adoimpl.d11 file at run time, via reflection, for purposes of dynamically invoking the methods described below.

Lines 12 to 14 expose a method "Connect" of the ADOconnection object which has a string parameter "adostring". The method returns a scratchpad value (i.e., a value that is cached at the transaction server 20) indicative of whether the connection was successfully established (TRUE for success or FALSE for failure).

Lines 17 to 19 expose a method "Execute" of the ADO connection object which takes an SQL string as an input (representing a statement used to query the database 14) and returns a set of matching records as a looping object "RecordSet".

Lines 23 to 32 define the RecordSet object as an implementation of the looping object interface and indicates the qualifiedname of the relevant class within the DLL ("mycompany.ado.RecordSet").

Lines 27 to 29 expose the method "FieldByName" of the RecordSet object which returns a value of a field in the current record of the set of matching records. The field name is specified by the fieldname parameter. This method extends the basic looping object interface described above.

Line 31 exposes the method "GetCurrentRow" of the RecordSet object which returns the current row (record) as a looping object "RecordSetRow". This method also extends the basic looping object interface.

Lines 33-42 of FIGS. 3A-3B define the RecordSetRow object as another implementation of the looping object interface and indicates the qualified name of this object in the .DLL ("mycompany. ado. RecordSetRow").

Lines 37 to 39 expose the method "Column Value" of the RecordSetRow object which returns the value of the column (field) for the current row indicated by an input "index" parameter.

Line 41 exposes the method "ColumnCount" of the RecordSetRow object which returns the number of columns for the current row.

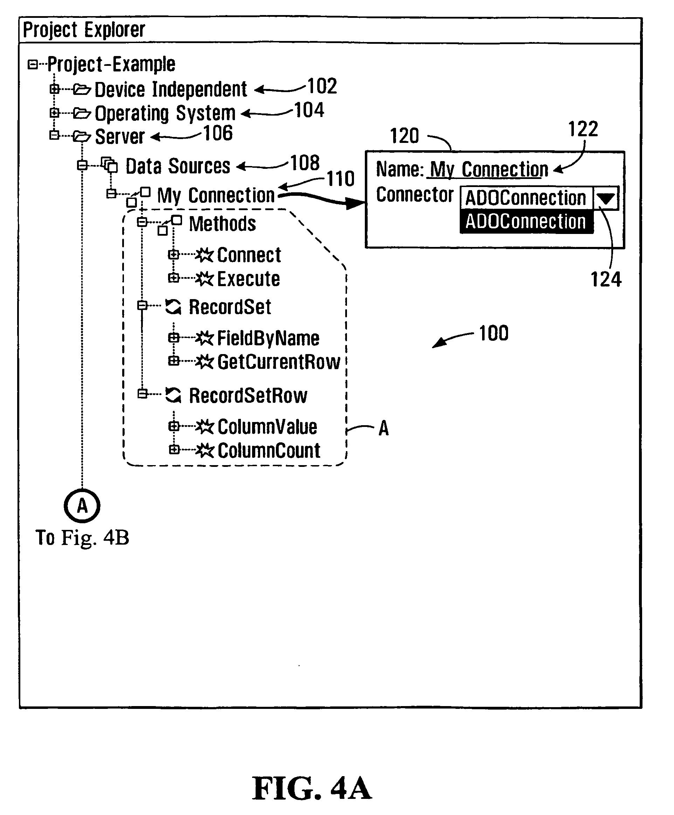

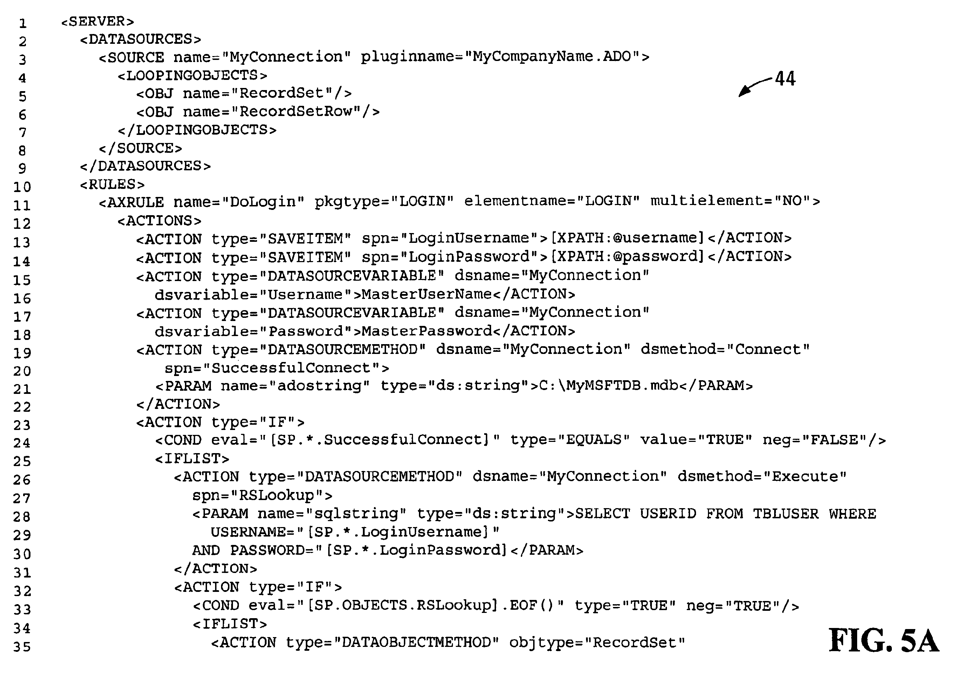

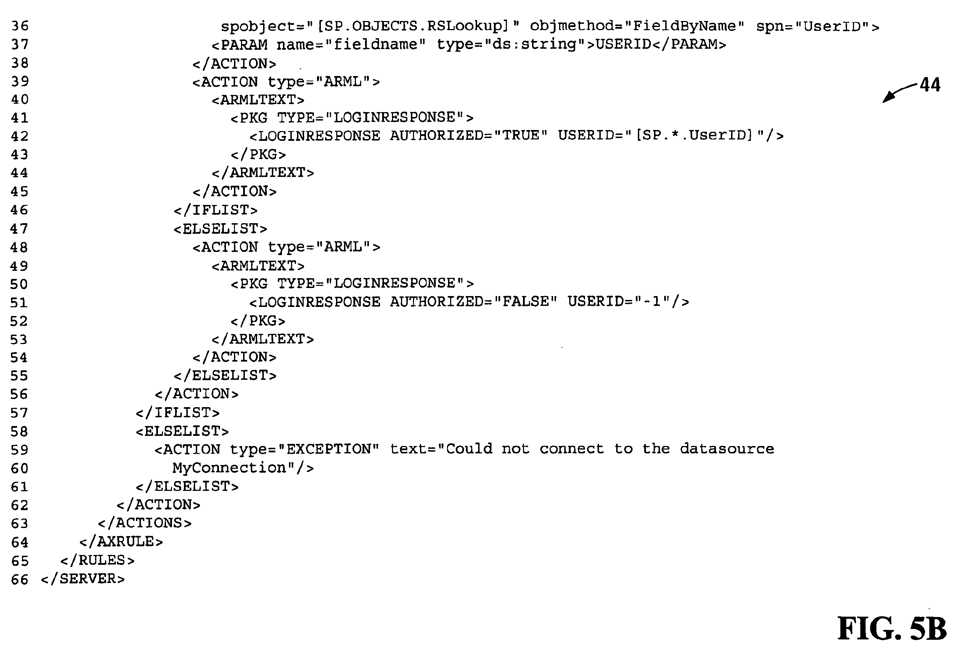

FIGS. 4A-4C illustrate a screen shot of a portion of the RAD tool GUI after configuration of the RAD tool 40 with the connector descriptor document 50 plug-in and entry of user inputs 46 by an integrator. FIGS. 4A-4C are perhaps best viewed in conjunction with FIGS. 5A and 5B, which illustrate the master definition file 44 corresponding to the icon hierarchy shown in FIGS. 4A-4C as may ultimately be published (output) by the tool 40.

The window illustrated in FIGS. 4A-4C is a "project explorer" window which may represent only a portion of the GUI of RAD tool 40. The term "project" is essentially synonymous with the master definition file 44 under development. The project explorer contains a visual hierarchy of icons 100 that is created by the integrator to indicate the processing that should be performed at transaction server 20 by objects 70, in conjunction with connector 42, responsive to the receipt of XML packages from device 30.

Other portions of the RAD tool GUI (not shown) may include a main design area and a toolbar. The main design area may display the properties of currently-selected application component (icon) of the hierarchy 100. The properties are XML attributes associated with the XML element that is represented by the icon. The user of the RAD tool 40 may be able to enter text in editable fields near each property name to set the XML attribute values.

The toolbar may facilitate various development activities which occur during the creation of the hierarchy 100. The toolbar may for example include a menu list and icons for compiling or publishing the current project. Compiling refers to checking of various aspects of the defined program structure for errors or possible deviations from good programming practices (e.g. for an if then-else ACTION icon, a hint message may advise the user that no actions have been defined in the "else" logic branch). Publishing refers to generating the master definition file 44 from the hierarchy 100. Publishing may entail serialization of a Document Object Model (DOM) tree representation of the master definition file 44 that is automatically generated within the memory 43 of RAD tool 40 as the user creates icons and assigns properties to them. DOM is described in detail in the W3C Recommendation entitled Document Object Model (DOM) Level 3 Core Specification, Version 1.0, 07 April 2004, provided at www.w3.org/TR/2004/REC-DOM-Level-3-Core-20040407/, which is hereby incorporated by reference hereinto.

The hierarchy 100 includes three main branches represented by icons 102, 104 and 106.

The first two branches, namely the device independent branch 102 and operating system branch 104, correspond to a portion of master definition file 44 which defines a wireless communication device application for downloading to, interpretation by and execution at the wireless communication device 30. Device independent branch 102 pertains to aspects of the wireless communication device application which are consistent between wireless communication device operating systems, such as the definition of application events (occurrences which trigger processing at wireless communication device application regardless of the application's status), database tables (tables for storing application-related data at device 30) and data rules (rules which dictate how incoming or outgoing XML packages affect data stored in database tables at device 30). The operating system branch 104, on the other hand, is for the definition of operation system-specific GUI screens that are displayed at the device 30. The definition of icons in these two branches 102 and 104 may result in the generation of XML elements and attributes as described in Appendix "A" of U.S. Patent Application No. 10/537,621, referenced above. These two branches do not pertain directly to transaction server operation and are thus not a focus of the present description. The branches are shown in collapsed form in FIG. 4A.

The third branch, server branch 106, corresponds to a portion of master definition file 44 which defines transaction server operation for parsing incoming messages from the wireless communication device 30, passing message data to the application 14, and returning any results from the application 14 to the device 30. Server branch 106 is shown in expanded form (i.e. with subordinate branches/icons visible) in FIG. 4A.

Each server branch contains a data source branch and a rules branch.

The data sources branch 108 below server branch 106 identifies the connectors that the integrator has opted to use at transaction server 20 for connecting to application 14. In the illustrated example, the integrator has opted to use only connector 42 to access the application 14. Accordingly, only one connector icon 110 appears in the data sources branch 108. The data source branch 108 corresponds to lines 2-9 of FIG. 5A.

The user interaction with the RAD tool GUI for defining the connector icon 110 in the project explorer window may be as follows. The data sources icon 108 may initially be selected with a mouse (or similar user input mechanism) of the RAD tool 40. A right click (or similar user action) may cause a pop-up menu to be displayed. The pop-up menu may present a list of permissible actions that may be taken in the context of the data sources branch 108, including which icons can be created in that branch. An Add Connector option may permit the user to create an icon representing a connector to be used to access application 14 at run time. Selection of that menu item may cause the icon 110 to be created below icon 108, as shown in FIG. 4A, and a connection properties window to be displayed in a main design area of the RAD tool GUI.

The definition of connector properties in the connector properties window is illustrated in inset 120 of FIG. 4A. A name field 122 allows the user (the integrator) to enter a name ("MyConnection") that will be displayed as part of the icon 110. A "Connector" field 124 provides a drop-down list which lists, by name, each connector for which a plug-in has been provided to the RAD software 52 (FIG. 2). In FIG. 4A, the list is illustrated in a dropped-down state, with only one entry, namely "ADO Connection", being visible. The descriptor "ADO Connection" corresponds to the sole connector 42 of the present embodiment, and originates from the displayname attribute at line 2 of the connector descriptor document 50 (FIG. 3A).

Below the connector icon 110, a "read-only" portion A of the hierarchy 100 shows, at a first level, all of the classes defined in the library 48 (ADOConnection, RecordSet and RecordSetRow) and, at a second level, each method defined within each class. A third level (not illustrated) may show each parameter for each method and the type of each parameter. The information presented in read only portion A is obtained from the connector descriptor document 50 and is presented to communicate information about the features of connector 42 to the integrator. The connector document 50 may be parsed and converted to a DOM tree representation to facilitate dynamic access to the XML elements and attributes of document 50 and their values to make presentation of portion A possible.

For clarity, the reason that the connector object (defined at lines 8-20, FIG. 3A) is not represented in FIG. 5A while the looping objects are represented (at lines 3-8) is that, in the present embodiment, there is only one connector object definition per connector description document 50. Thus, it is implied that ADOConnection is the connector object for the data source.

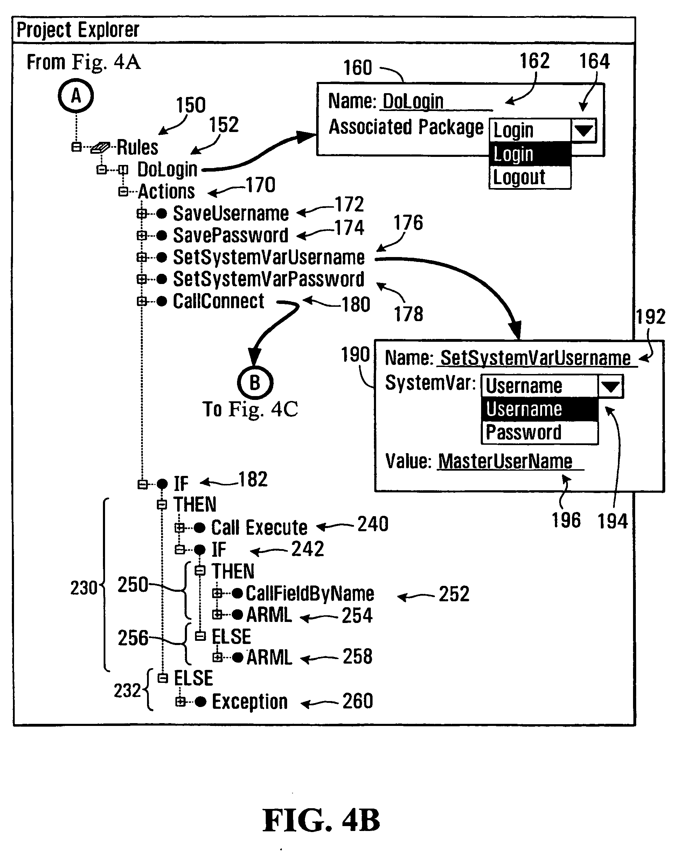

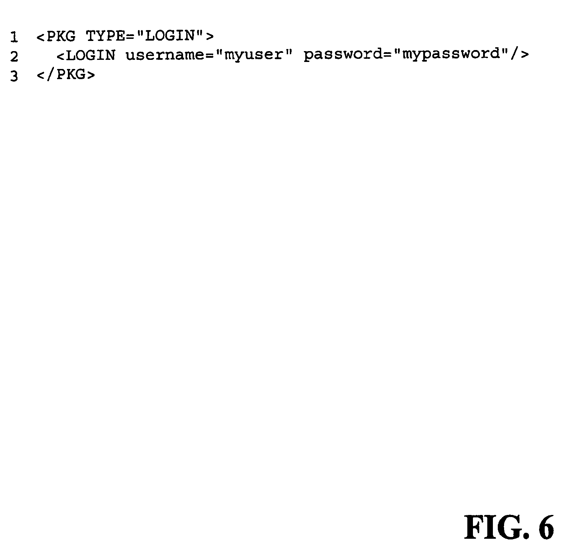

Referring to FIG. 4B, the rules branch 150 below server branch 106 contains one or more rules for handling messages from the wireless communication device 30. A rule represents the processing to be performed by transaction server 20 upon the arrival of a particular type of XML package from device 30. Only one rule is defined in the present embodiment, for handling a package of type LOGIN. An exemplary instance of a LOGIN package is illustrated in FIG. 6. This rule is represented by the rule icon 152.

The user interaction with the RAD tool GUI for defining the rule icon 152 in the project explorer window may be similar to the above-described procedure for creating a connector icon 110. The Rules icon 150 may initially be right-clicked to cause a pop-up menu to be displayed with a list of permissible actions. An Add Rule option may permit the user to create the icon 152 below icon 150 and a rule properties window to be displayed in a main design area of the RAD tool GUI.

The definition of rule properties in the rule properties window is illustrated in inset 160. A name field 162 allows the user to enter a name ("DoLogin") that will be displayed as part of the icon 152. An "associated package" field 164 provides a drop-down list which lists, by name, each package that can be received at transaction server 20 as defined under the device independent branch 102 (FIG. 4A). In FIG. 4B, the list is illustrated in a dropped-down state, with two entries, namely "LOGIN" and "LOGOUT", being visible. The "LOGIN" entry corresponds to a LOGIN package, for which an exemplary instance (as might be received at run time) is shown in FIG. 6. The text "LOGIN" in the drop-down list originates from the pkgtype attribute of the PKG element.

The rule 152 is represented in master definition file 44 by the AXRULE element which is opened at line 11 of FIG. 5A. The fact that the package has a body containing only one element also named "LOGIN" is indicated by the elementname and multielement attributes at line 11.

The actions icon 170 of FIG. 4B represents the actions to be performed when the package identified by the containing rule icon 152 (i.e. LOGIN package) arrives at the transaction server 20. Icon 170 corresponds to the ACTIONS element (opened at line 12 of FIG. 5A, closed at line 63 of FIG. 5B) and may be automatically generated below icon 152 upon the latter icon's creation.

Immediately below the Actions icon 170, a total of six action icons 172, 174, 176, 178, 180 and 182 are defined. Each of these action icons may be defined by initially right-clicking actions icon 170, selecting an Add Action pop-up menu option, and specifying a type for the action. Permissible action types are defined in section 6 of Appendix "A" of U.S. Patent Application No. 10/537,621. New action types DATASOURCEMETHOD, DATASOURCEVARIABLE, DATAOBJECTMETHOD and EXCEPTION, not described in the above noted publication, may also be defined. These action types are described below. At run time, the actions 172, 174, 176, 178, 180 and 182 are performed in the order in which their icons appear in FIG. 4B. Only one of the icons 182 is shown with subordinate branches expanded in FIG. 4B; the subordinate branches are collapsed for the other actions.

Action icon 172 represents a SAVEITEM action whereby the value of the attribute "username" in the LOGIN XML package shown in FIG. 6 is saved to a scratchpad memory variable "LoginUsername". This icon corresponds to the ACTION XML element at line 13 of FIG. 5A. The value [XPATH:@username] uses Xpath notation. XPath is a language that describes a way to locate and process items in XML documents by using an addressing syntax based on a path through the document's logical structure or hierarchy. Xpath is known in the art.

Similarly, action icon 174 represents a SAVEITEM action whereby the value of the attribute "password" in the LOGIN XML package is saved to a scratchpad memory variable "LoginPassword". Icon 176 corresponds to the ACTION XML element at line 14 of FIG. 5A.

Action icon 176 represent an action of type DATASOURCE-VARIABLE which causes a system variable defined within the library 48 to be set to a value specified by the integrator. When action icon 176 is created, action properties may be defined in the main design area as shown at inset 190. A name field 192 allows the user to enter a name ("SetSystemVarUsername") that will be displayed as part of the icon 176. A "systemvar" field 194 provides a drop-down list which lists, by name, each system variable defined within connector descriptor document 50. In FIG. 4B, the list is illustrated in a dropped-down state, with two entries, namely "Username" and "Password", corresponding to lines 6 and 7 of FIG. 3A, with the former entry being selected. The contents of the value field 196, "MasterUserName", are entered by the integrator. The value for the Username system variable for allowing connection to the database application 14 will be known to the integrator and so can be hard coded in field 196 as shown. Icon 176 corresponds to the ACTION XML element at lines 15-16 of FIG. 5A.

Action icon 180 is analogous to icon 176, and represents an action which causes system variable Password to be set to the value MasterPassword. Icon 180 corresponds to the ACTION element at lines 17-18 of FIG. 5A.

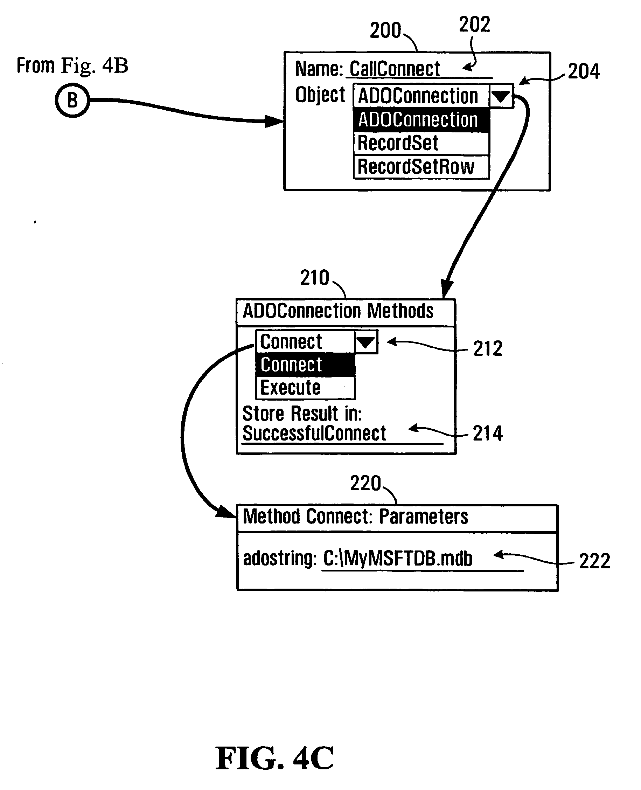

Action icon 178 represent an action of type DATASOURCE-METHOD which causes one of the methods 49 of library 48 to be invoked at run time. When action icon 178 is created, action properties may be defined in the main design area as shown at insets 200, 210 and 220 of FIG. 4C. Specifically, a name field 202 allows the integrator to enter a name ("CallConnect") that will be displayed as part of the icon 178. An "object" field 204 provides a drop-down list which lists each class (each non-system variable object) defined within connector descriptor document 50, namely ADOConnection, RecordSet, and RecordSetRow. Upon user selection of the ADOConnection entry, a further methods field 212 may be presented which lists the public methods defined within the context of the selected ADOConnection object, i.e., Connect and Execute. Upon selection of the entry representing the Connect method, a further return result field 214 and parameters field 222 may be presented based on that selection. The return result field is for user specification of a scratchpad variable name, "SuccessfulConnect", for storing the return result of the Connect method. The parameters field 222 sets forth each parameter of the Connect method next to an edit box entry for user specification of the parameter value. In the illustrated example, the contents of the field 222, "C:/MyMSFTDB.mdb", are hard-coded by the integrator via user inputs 46, based on knowledge of the directory of application server 12 in which the SQL database is stored. Icon 180 corresponds to the ACTION XML element and subordinate PARAM element at lines 19-22 of FIG. 5A.

Referring back to FIG. 4B, action icon 182 represents an action of type IF which causes one of the THEN branch 230 or the ELSE branch 232 of actions to be executed at run time based on an integrator-specified condition that is evaluated at run time. Here, the condition is the returned value of the Connect method as stored in the SuccessfulConnect scratchpad variable. If the connection was successful, as indicated by a "TRUE" value in "SuccessfulConnect", the THEN branch 230 is executed, otherwise the ELSE branch 232 is executed. The integrator may specify the condition in an action properties window (not illustrated). This icon 182 corresponds to lines 23-24 of FIG. 5A. It is noted that the "neg" attribute of the COND element indicates whether the operand specified by the "type" attribute should be negated. THEN branch 230 and ELSE branch 232 correspond to lines 25-57 and 58-61 respectively of FIGS. 5A-5B.

Within IF branch 230 of FIG. 4B, the first action icon 240 of type DATASOURCEMETHOD is analogous to icon 180, but invokes the method Execute with a sqlstring parameter, hard coded by the integrator to have the value: "SELECT USERID FROM TBL USER WHERE USERNAME ="[SP.*.LoginUserName]"AND PASSWORD ="[SP.*.LoginPassword]. The [SP.*.LoginUserName] and [SP.*.LoginPassword] portions of this string will be substituted by the values of scratchpad variables LoginUserName and LoginPassword respectively at run time, resulting in a sqlstring run-time value of "SELECT USERID FROM TBL USER WHERE USERNAME ="myuser" AND PASSWORD="mypassword"". The value returned by the Execute method, which is the return result of executing the above SQL string in SQL database application 14, is stored in the scratchpad in a looping object named "RSLookup". Action icon 240 corresponds to lines 26-31 of FIG. 5A.

Action icon 242 of FIG. 4B is another IF action whose condition is the return result of a run-time invocation of an end-of-file method of the RSLookup looping object. The XML element corresponding to icon 242, i.e. line 33 of FIG. 5A, may "activate" at run time a logic branch within an object 70 containing a hard-coded call to the end-of-file method to be executed at run-time. This hard-coded call is possible because the end-of-file method is an implementation of an interface which is known at design time to the author of the class 62 from which the object 70 is instantiated.

Within the subordinate THEN branch 250, which is executed if the return result is not end-of-file (indicating that the SQL database 14 had at least one entry for the input usemame and password), action icon 252 of type DATAOBJECTMETHOD results in the run time invocation of the FieldByName method of the RSlookup object in the scratchpad, with the value "USERID" being passed for parameter fieldname, and with the result being stored in another scratchpad variable UserID (see lines 35-38 of FIGS. 5A-5B), and action icon 254 of type ARML results in the run time composition and transmission of an XML package of type LOGINRESPONSE, containing the result of the FieldByName method (as stored in scratchpad variable UserID), and an indication that login authorization has been provided, to wireless communication device 30 (lines 39-45 of FIG. 5B). Otherwise, in subordinate ELSE branch 256, action icon 256 (lines 47-54 of FIG. 5B) causes the same message to be sent but with different contents indicating that login authorization was not provided.

Finally, within ELSE branch 232 of FIG. 4B, if connection to the application 14 failed (because the value stored to "SuccessfulConnect" is FALSE), action icon 260 of type EXCEPTION results in the run-time throwing of an exception, which causes the failure to be logged to an exception file (see lines 59-60 of FIG. 5B) at the transaction server 20.

In operation, transaction server 20 (FIG. 1) receives the LOGIN XML package of FIG. 6 from wireless communication device 30. The transaction server 20 then parses the XML package via an XML DOM Parser. The transaction server 20 inspects the headers of the LOGIN XML package for attributes used to identify the master definition file 44 with which the package is associated in local storage. The headers may for example be in the XML transport headers that form part of the same XML element as the <PKG> tags. These are used by the transaction server 20 and device 30 for routing. An exemplary header may be as follows:

<HEAD ID="134243" DT="1 JAN 2003 13:40:55" VERSION="1.9" APPNAME="MYAPP" DEVICE="3" PID="2365" AVMV="1.4">MyMobileID</HEAD>

In the exemplary header above, the values of the APPNAME and VERSION attributes are the name and version of the application registered on the transaction server 20. This information is used by the server 20 to uniquely identify master definition file 44 (the "application") corresponding to the message.

The virtual machine software 60 then instantiates objects 70 described in master definition file 44 within memory 26. The virtual machine software 60 then uses the PKG TYPE value of the LOGIN XML package to identify a rule object 70 corresponding to the received message. In the present embodiment, only one rule, defining operation when a package of type LOGIN is received (which rule is represented by the AXRULE element at lines 11 to 64 of FIGS. 5A and 5B), is defined. The rule object 70 has data members and data member values corresponding to the attributes of the AXRULE element (FIG. 5A. line 11). The rule is "executed", i.e. a method of rule object 70 is invoked, which causes program logic defined within action objects 70 subordinate to the rule object 70 to be executed in sequence. The action objects 70 correspond to the various ACTION elements at lines 12 to 63 of FIGS. 5A and 5B.

For certain "built-in" types of actions, such as actions of type SAVEITEM or IF actions for example, the logic that is executed when the action is performed is fully contained within the action object 70 and is merely "customized" by the setting of data members of that action object based on corresponding ACTION element attribute values.

For other types of actions that are not built-in, such as actions of type DATASOURCEMETHOD for invoking a method 49 defined within library 48, the action object 70 invokes one of the methods 49 (as provided by the connector provider - shown in FIG. 2) to achieve its objective. This approach is used to invoke the Connect method 49 of the ADOConnector object for example (see lines 19-22 of FIG. 5A). The ADOConnector object may be located by way of a hashtable, which may be used to retrieve cached objects for greater efficiency as compared with loading the objects from XML from disk whenever they are needed.

The virtual machine software 60 (FIG. 2) then locates the associated DLL, as specified in line 5 of FIG. 3A and loads the DLL into memory 26. The virtual machine software 60 then locates the Connect method 49 of the ADOConnection object through .NET reflection, using techniques and known to those skilled in the art (see, e.g., msdn2.microsoft.com/en-us/library/66btctbe(VS.80).aspx), which is incorporated by reference hereinto.

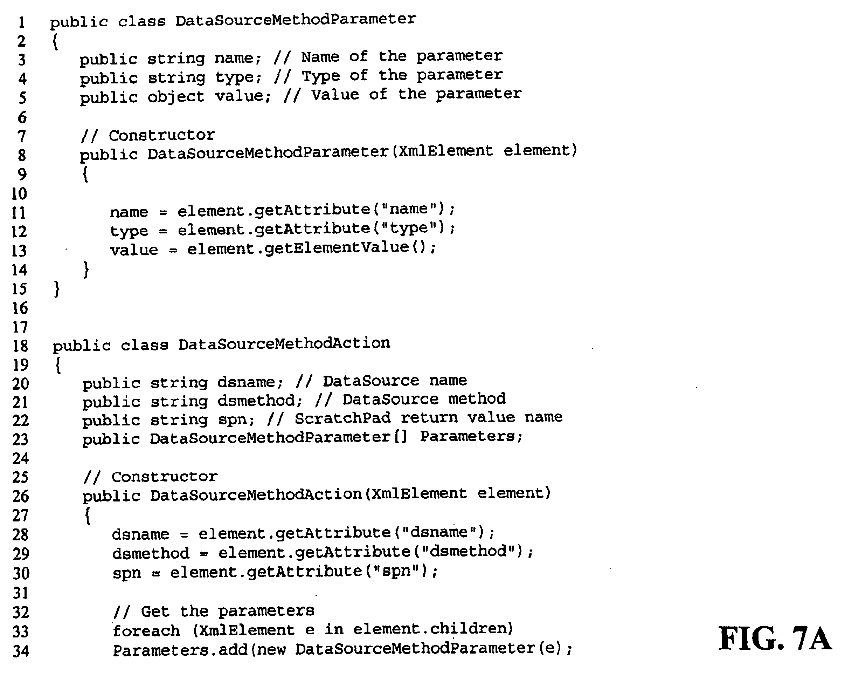

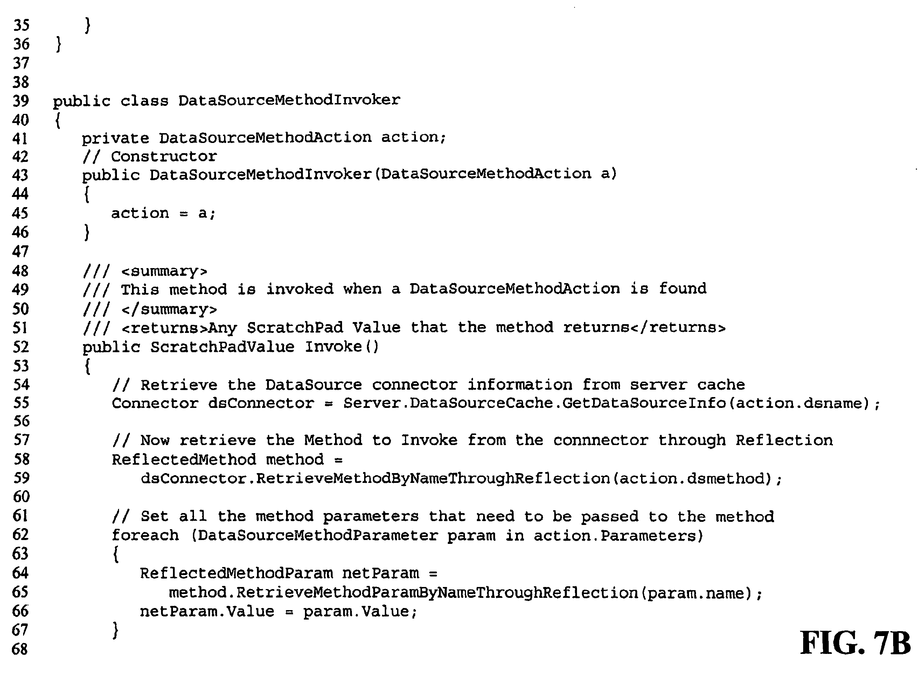

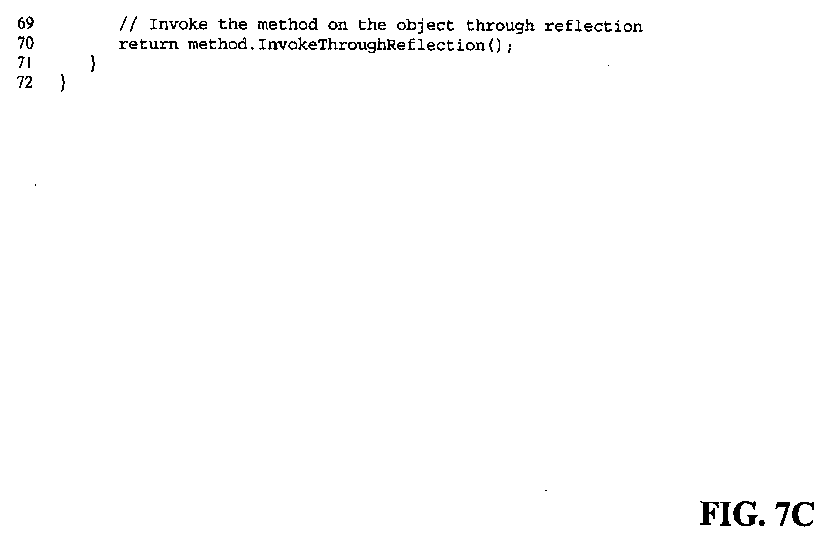

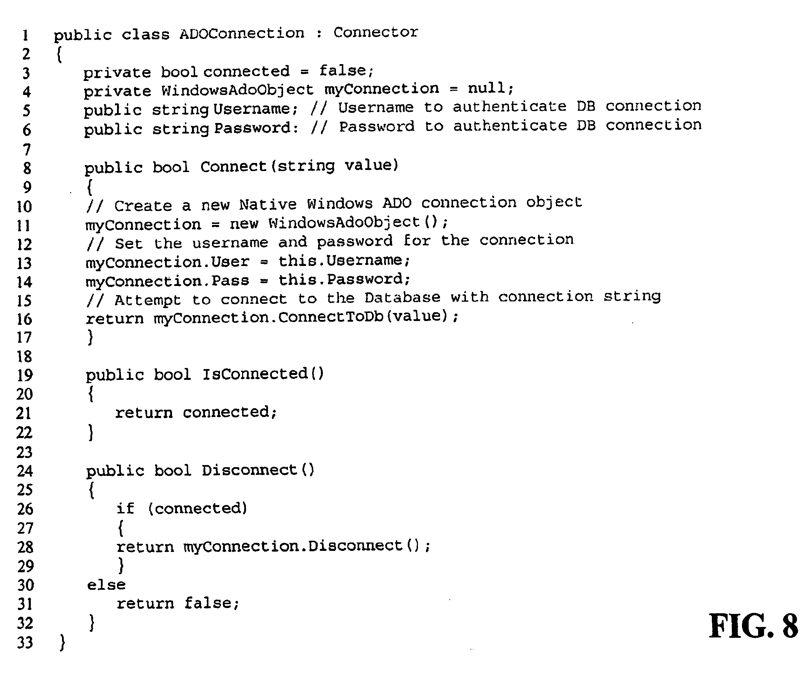

Once found, an instance of the ADOConnection object is created. The virtual machine 60 then executes the Connect method through .NET reflection method invocation, passing the supplied connection string parameter as defined at line 21 of FIG. 5A. Pseudocode representating classes relied upon by action object 70 for purposes of invoking the Connect method is shown in FIGS. 7A-7C. The significant data members that might be set are illustrated within the class. Also illustrated are supporting classes DataSourceMethodParameter and DataSourceMethodAction. Pseudocode representative of the class from which the ADOConnection object is instantiated is shown in FIG. 8.

The Connect method (FIG. 8, lines 8-17) is executed in native .NET. The result of the method is retrieved from application server 12 and further processed. The ADOConnection object instance is held in memory 26 until the execution thread of the current rule is completed. It then falls out of scope and is released.

As will be appreciated by those skilled in the art, modifications to the above-described example can be made without departing from the essence of the invention. For example, in some examples, such as those in which the application 14 is not a database application, library routines 49 may not invoke legacy API functions, Rather, the routines 49 may access a database at application server 12 in which the application 14 stores application data. The routines 49 may access and/or modify the application data in this database directly (i.e. without using the legacy API). In this case, the routines 49 may incorporate logic which emulates logic existing within the application 12 for causing any change to a database table or record to properly update any other database values which are tied or related to the changed value. For example, if a new customer record is added to one database stable, the logic may need to increment a customer count value in another database table. This logic may be necessary to avoid corrupting a database that is normally accessed by the application 14. When the author of the connector 42, who has a good understanding of application 14, emulates this logic within the routines 49 of library 48, the integrator who simply uses the connector 42 to invoke routines 49 by way of calls encoded within the master definition file 44 is freed from the burden of understanding and implementing that logic.

In another alternative, the interfaces provided by the author of the virtual machine software may define a "designer" object for facilitating the design of a particular connector in the RAD tool GUI. For example, if it is desired to provide a custom Query Designer for creating SQL queries in the RAD tool GUI in the case where the application is an SQL database, the author could design a custom interactive designer which conforms to a designer interface. The designer would "plug into" the RAD tool to provide a customized look and feel for creating SQL queries which goes beyond the conventional RAD tool GUI.

Other modifications will be apparent to those skilled in the art and, therefore, the invention is defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

### APPENDIX "A": ARML Specification

| Contents | | |
|---|---|---|
| 1 | Introduction | 28 |
| 1.1 | Purpose of document | 28 |
| 1.2 | Audience | 28 |
| 1.3 | Definitions & Acronyms | 28 |
| 2 | ARML Overview | 28 |
| 2.1 | ARML design considerations | 28 |
| 2.2 | ARML usage | 29 |
| 2.3 | The scratchpad area | 29 |
| 2.4 | System Variables and Functions | 29 |
| 2.4.1 | Variables: | 30 |
| 2.4.2 | Functions: | 30 |
| 2.5 | Single-Field Lookup | 30 |
| 3 | ARML application definition | 30 |
| 3.1 | General | 30 |
| 3.1.1 | Description | 30 |
| 3.1.2 | Structure | 30 |
| 3.1.3 | Tags | 31 |
| 3.2 | Table Definitions Section | 32 |
| 3.2.1 | Description | 32 |
| 3.2.2 | Structure | 32 |
| 3.2.3 | Tags | 32 |
| 3.2.4 | Example | 33 |
| 3.3 | Package Definitions Section | 34 |
| 3.3.1 | Description | 34 |
| 3.3.2 | Structure | 34 |
| 3.3.3 | Tags | 34 |
| 3.3.4 | Example | 35 |
| 3.4 | Device Interface Definitions Section | 36 |
| 3.4.1 | Description | 36 |
| 3.4.2 | Structure | 36 |
| 3.4.3 | Tags | 36 |
| 3.4.4 | Example | 37 |
| 4 | Application-defined packages | 37 |
| 4.1 | General | 37 |
| 4.1.1 | Description | 37 |
| 4.1.2 | Structure | 37 |
| 4.1.3 | Tags | 38 |
| 4.2 | Package information | 38 |
| 4.2.1 | Example | 38 |
| 5 | User interface Definitions | 39 |
| 5.1 | General | 39 |
| 5.1.1 | Description | 39 |
| 5.1.2 | Structure | 39 |
| 5.1.3 | Tags | 40 |
| 5.2 | Queries definition section | 42 |
| 5.2.1 | Description | 42 |
| 5.2.2 | Structure | 42 |
| 5.2.3 | Tags | 42 |
| 5.3 | Menu definition section | 43 |
| 5.3.1 | Description | 43 |
| 5.3.2 | Structure | 43 |
| 5.3.3 | Tags | 43 |
| 5.4 | Buttons definition section | 44 |
| 5.4.1 | Description | 44 |
| 5.4.2 | Structure | 44 |
| 5.4.3 | Tags | 44 |
| 5.5 | Text Items definition section | 45 |
| 5.5.1 | Description | 45 |
| 5.5.2 | Structure | 45 |
| 5.5.3 | Tags | 45 |
| 5.6 | Edit boxes definition section | 46 |
| 5.6.1 | Description | 46 |
| 5.6.2 | Structure | 46 |
| 5.6.3 | Tags | 46 |
| 5.7 | Choice items definition section | 47 |
| 5.7.1 | Description | 47 |
| 5.7.2 | Structure | 47 |
| 5.7.3 | Tags | 47 |
| 5.8 | Checkboxes definition section | 49 |
| 5.8.1 | Description | 49 |
| 5.8.2 | Structure | 49 |
| 5.8.3 | Tags | 49 |
| 5.9 | List.boxes definition section | 50 |
| 5.9.1 | Desciption | 50 |
| 5.9.2 | Structure | 50 |
| 5.9.3 | Tags | 50 |
| 5.10 | Grids | 51 |
| 5.10.1 | Description | 51 |
| 5.10.2 | Structure | 52 |
| 5.10.3 | Tags | 52 |
| 5.10.4 | Example | 53 |
| 6 | The Smart Client event model | 53 |
| 6.1 | The EVENTS tag | 54 |
| 6.2 | The EVENT tag | 54 |
| 6.2.1 | The BUTTONCLICK event | 54 |
| 6.2.2 | The MENUITEMSELECTED event | 54 |
| 6.2.3 | The DATA event | 54 |
| 6.3 | The ACTION tag | 55 |
| 6.3.1 | The OPEN action | 55 |
| 6.3.2 | The ARML action | 55 |
| 6.3.3 | The SAVE action | 55 |
| 6.3.4 | The PURGE action | 56 |
| 6.3.5 | The NOTIFY action | 56 |
| 6.3.6 | The CLOSE action | 56 |
| 6.3.7 | The ALERT action | 56 |
| 6.3.8 | The INTEGRATION action | 56 |
| 6.3.9 | The CLOSESCREEN action | 56 |
| 6.3.10 | The REFRESH action | 57 |
| 6.3.11 | The SAVEITEM action | 57 |
| 6.3.12 | The IF Action | 57 |
| Example | of airix event model | 59 |
| 7 | AVM-server system interactions | 61 |
| 7.1 | General | 61 |
| 7.1.1 | Description | 61 |
| 7.1.2 | Structure | 61 |
| 7.1.3 | Tags | 61 |
| 7.2 | Device Registration & deregistration package | 62 |
| 7.2.1 | Description | 62 |
| 7.2.2 | Structure | 62 |
| 7.2.3 | Tags | 62 |
| 7.2.4 | Example | 62 |
| 7.3 | Registration confirmation package | 62 |
| 7.3.1 | Description | 62 |
| 7.3.2 | Structure | 62 |
| 7.3.3 | Tags | 63 |
| 7.3.4 | Example | 63 |
| 7.4 | Find applications package | 64 |
| 7.4.1 | Description | 64 |
| 7.4.2 | Structure | 64 |
| 7.4.3 | Tags | 64 |
| 7.5 | Find applications confirmation package | 64 |
| 7.5.1 | Description | 64 |
| 7.5.2 | Structure | 64 |
| 7.5.3 | Tags | 64 |
| 7.6 | Application Registration & deregistration package | 65 |
| 7.6.1 | Description | 65 |
| 7.6.2 | Structure | 65 |
| 7.6.3 | Tags | 65 |
| 7.7 | Application registration & deregistration confirmation package | 65 |
| 7.7.1 | Description | 65 |
| 7.7.2 | Structure | 65 |
| 7.7.3 | Tags | 66 |
| 7.7.4 | Example | 66 |
| 7.8 | Setting the active device package | 67 |
| 7.8.1 | Description | 67 |
| 7.8.2 | Structure | 67 |
| 7.8.3 | Tags | 67 |
| 7.8.4 | Example | 67 |
| 7.9 | Set active device response | 67 |
| 7.9.1 | Description | 67 |
| 7.9.2 | Structure | 67 |
| 7.9.3 | Tags | 67 |
| 7.9.4 | Example | 68 |
| 7.10 | Invalid Application package | 68 |
| 7.10.1 | Description | 68 |
| 7.10.2 | Structure | 68 |
| 7.10.3 | Tags | 68 |
| 7.10.4 | Example | 68 |
| 8 | Application-server system interactions | 68 |
| 9 | ARML future developments | 69 |

### 1. INTRODUCTION

### 1.1 Purpose of document

This document describes the structure and syntax of the ARML language.

### 1.2 Audience

The document is intended to be read by AIRIX developers and users of ARML.

### 1.3 Definitions & Acronyms

- ARML: AIRIX Markup Language
- XML: Extensible Markup Language

### 2 ARML OVERVIEW

ARML is an XML markup language used by the AIRIX platform. It performs three tasks;
- Data is passed back and forth between the mobile server, AIRIX platform and enterprise application using ARML.
- The AIRIX Smart Client uses ARML to define the user interface for an AIRIX-enabled application on the mobile device
- The AIRIX server uses ARML to define that data that it stores for the application in its database.

### 2.1 ARML design considerations

ARML has been designed with the following goals in mind;
- Transactions and screen definitions should be as independent as possible
- AIRIX should be unaware of internals of the enterprise application
- Strict conformance to the XML specification will be enforced
- Operation should be transparent to the end user
- ARML packages should be readable as is
- The minimum number of characters needed should be used

### 2.2 ARML usage

The diagram below illustrates how ARML is used.

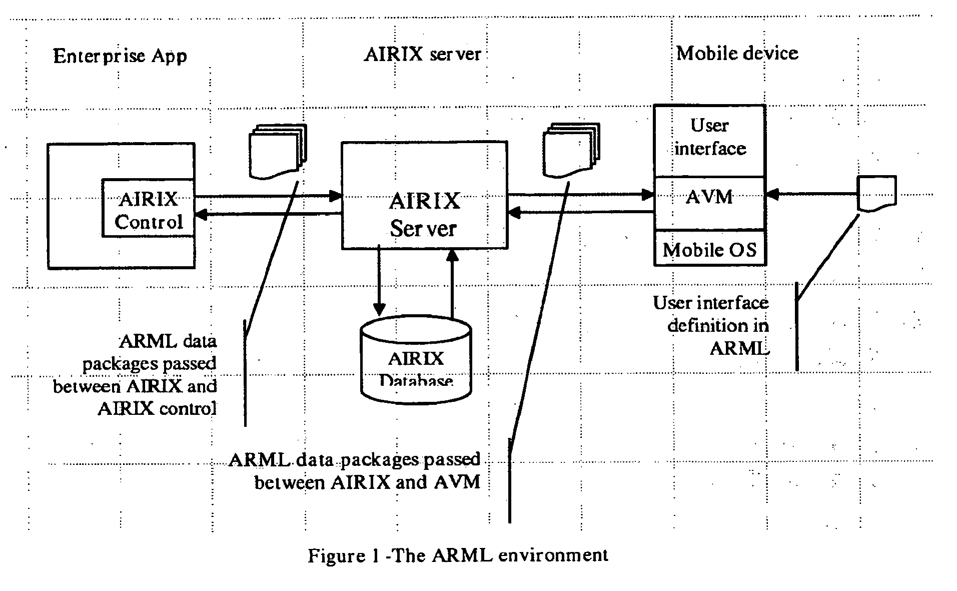

The key to ARML usage is the application definition file held on the AIRIX server. This file defines the AIRIX tables for the application, the allowed message set and the user interface definitions for the application on a given device.

### 2.3 The scratchpad area

The scratchpad is used as a temporary storage area where a global value or a value associated to a screen can be saved for future use. The syntax for a scratchpad value is as follows:
screen scratchpad value: [SP.*screen.savename*]
global scratchpad value: [SP*.***.savename*]

The syntax for retrieving a global scratchpad value can also be used to retrieve screen scratchpad values.

### 2.4 System Variables and Functions

There are several variables that are available that will retrieve application and system values to be used throughout the application. The syntax for these variables are as follows:

### 2.4.1 Variables:

[DATE] - returns the current system date, formatted as dd mmm yy
[TIME] -returns the current system time, formatted as hh:mmas am/pm.
[SYS.VAR.DATE] - returns the current system date, formatted as dd mmm yy [SYS.VAR.MOBILEID] - retrieves the device's Mobile ID
[SYS.VAR.APPNAME] - retrieves the name of the application.
   [SYS.VAR.APPVERSION] - retrieves the version number of the application.
[SYS.VAR.SCVERSION] - retrieves the version number of the Smart Client.
[SYS.VAR.ARMLMAJOR] - retrieves the ARML major version of the application.
[SYS.VAR.ARMLMINOR] - retrieves the ARML minor version of the application.

### 2.4.2 Functions:

[SYS.FUNC.DATEADD([SYS.VAR.DATE],+-x)] - The Date Arithmetic tag is used to add or subtract days from the current date. In the tag, x represents the number of days added or subtracted. Developers can also choose to substitute a hard-coded date value in the Date Arithmetic tag, in the place of the [SYS.VAR.DATE] tag.

[SYS.FUNC.DATETOSTR([SYS.VAR.DATE],d mmm yyyy h:nnas tz)] - The Date To String tag is used to convert date data to a string value.

[SYS.FUNC.STRTODATE([SYS.VAR.DATE],d mmm yyyy h:nnas tz)] - The String to Date tag is used to convert string data to a date value, in the RFC 1123 format.

### 2.5 Single-Field Lookup

The single-field lookup will run a simple SELECT query with one where-clause to retrieve specific data. The syntax is as follows:

### [DB.DOLOOKUP(table, field, wherefield, wherevalue)]

### 3 ARML APPLICATION DEFINITION

### 3.1 General

### 3.1.1 Description

The application definition section defines the AIRIX tables and ARML data packages that are used for transactions involved with a specific application.

### 3.1.2 Structure

The ARML application definition has the following structure;

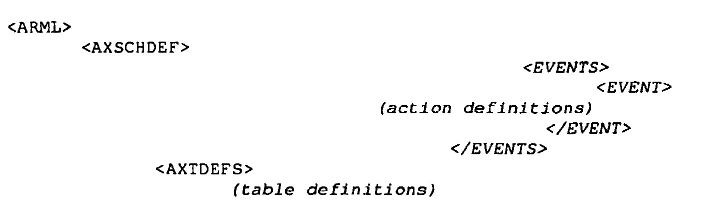

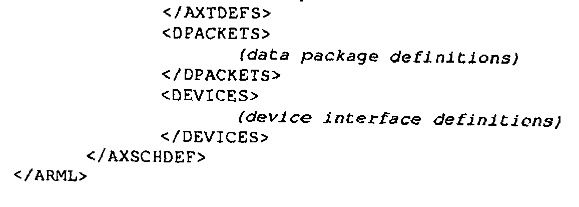

### 3.1.3 Tags

### 3.1.3.1 The <AXSCHDEF> tag

These tags (<AXSCHDEF>...dAXSCHDEF>) mark the start and end of the application definition. THE AXSCHDEF tag has two attributes;

| Attribute | Optional? | Description |
|---|---|---|
| APPNAME | No | The name of the application |
| VERSION | No | Which version of the application the file describes |
| DESC | No | A text description of the application for display purposes |
| ARMLMAJOR | No | The major version of the ARML language this application definition was created with. |
| ARMLMINOR | No | The minor version of the ARML language this application definition was created with. |

### 3.1.3.2 The <EVENTS> tag

The <EVENT> ... </EVENT> pair marks the start and end of a user-interface level event definition. See section 6 for a detailed discussion of the Smart Client event model.

### 3.1.3.3 The <EVENT> tag

The <EVENT>... <EVENT> pair marks the start and end of a user-interface level event definition. See section 6 for a detailed discussion of the Smart Client event model.

### 3.1.3.4 The <AXTDEFS> tag

The <AXTDEFS>...</AXTDEFS> pair marks the start and end of the table definitions section. It has no attributes.

### 3.1.3.5 The <DPACKETS> tag

The <DPACKETS>...</DPACKETS> pair marks the start and end of the data package definitions section. It has no attributes.

### 3.1.3.6 The <DEVICES> tag

The <DEVICES>...</DEVICES> pair marks the start and end of the device interface definitions section. It has no attributes.

### 3.2 Table Definitions Section

### 3.2.1 Description

The table definitions section defines the tables on the mobile device for the application

### 3.2.2 Structure

The table definitions section has the following structure;

```
 [wrapper tags}
 <TDEF>
      <FIELDS>
             <FLD>...<FLD>
      <FIELDS>
 </TDEF>
 (etc.)
 {wrapper tags}
```

### 3.2.3 Tags

### 3.2.3.1 The <TDEF> tag

Each table definition is enclosed within the <TDEF>...<ITDEF> pair. The TDEF tag has the following attributes;

| Attribute | Optional? | Description |
|---|---|---|
| NAME | No | The number of table definitions in the section |
| PK | No | Which of the table fields is the primary key for the table |
| DELINDEX | No | The index of this table with respect to all the tables for specifying the delete order. This value is 1 based. |

### 3.2.3.2 The <FIELDS> tag

The <FIELDS>...</FIELDS> tag pair marks where the fields in a given table are defined. The FIELDS tag has a no attributes.

### 3.2.3.3 The <FLD> tag

The <FLD>...</FLD> tag pair defines a single field in a table. Enclosed between the tags is the field name. The <FLD> tag has the following structure;

| Attribute | Optional? | Description |
|---|---|---|
| TYPE | No | The data type contained in the field. Permitted values are: |
| | | INT - integer value |
| | | STRING - a fixed-length string of n characters (see SIZE field) |
| | | MEMO - a string of max 65535 characters |
| | | AUTOINC - an integer value, automatically incremented by the database. This field will be read-only to the applications. |
| | | DATETIME - a datetime value |
| SIZE | No | If the TYPE is set to STRING, this field specifies the number of characters in the field |
| INDEXED | No | Specifies if the field needs to be indexed in the AIRIX database |
| REFERENCEFTELD | Yes | If this attribute is present, it defines that this field is a foreign key. The foreign table/field is given in the format "table(field)" |
| ALLOWNULL | No | Specifies if the field is allowed to have a null value |

### 3.2.4 Example

An email application would use 2 tables for storing sent emails.

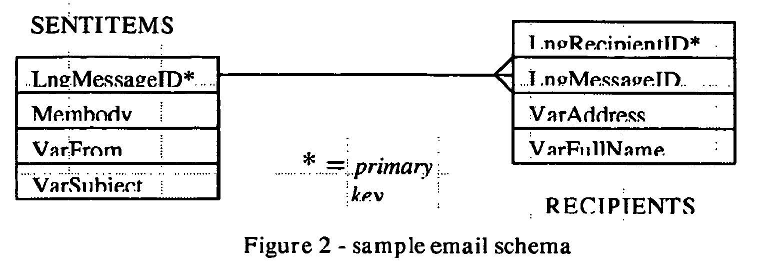

This translates into the following ARML fragment;

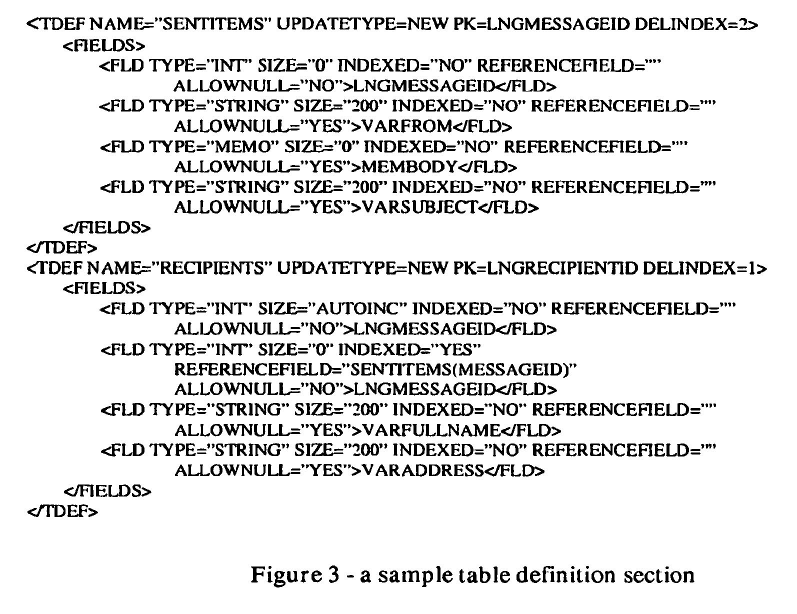

### 3.3 Package Definitions Section

### 3.3.1 Description

The package definitions section defines the structure of the application packages and the data that they carry.

### 3.3.2 Structure

The package definitions section has the following structure;

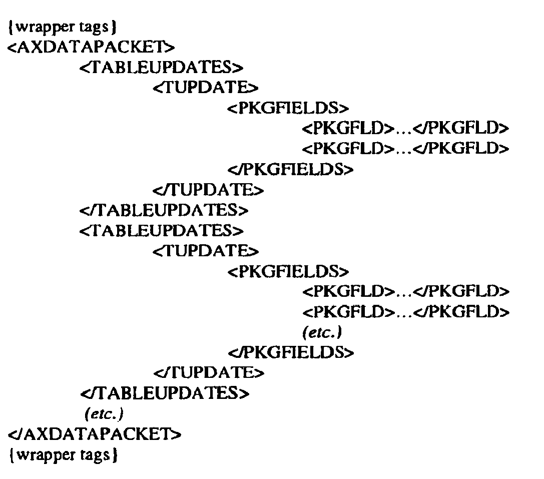

### 3.3.3 Tags

### 3.3.3.1 The <AXDATAPACKET> tag

The <AXDATAPACKET>... </AXDATAPACKET> pair delimits a package definition. The tag has the following attributes;

| Attribute | Optional? | Description |
|---|---|---|
| BODY | No | This field gives the name by which the data package is known |
| UPDATELOCALDATA | No | Specifies whether the package is to update the local database. |
| SENDTOAPP | No | Specifies whether the package is sent to the application server |

### 3.3.3.2 The <TABLEUPDATES> tag

The <TABLEUPDATES>...</TABLEUPDATES> pair marks the start and end of the table definitions section. It has no attributes.

### 3.3.3.3 The <TUPDATE> tag

Each table update is enclosed within the <TUPDATE>...<TUPDATE> pair. The TUPDATE tag has the following attributes;

| Attribute | Optional? | Description |
|---|---|---|
| TABLE | No | The table in the database that is updated |
| UPDATETYPE | No | The type of update that is being made to the database. Possible values are; |
| | | ADD - adds a new record into the table |
| | | DELETE - removes a record into the table |
| | | UPDATE - modifies a record in the table |
| WHEREFIELD | Yes | For a conditional update of a table, specifies the field and table to match on. This is in the format "table(field)". |
| WHEREPARAM | Yes | Text string specifying the value. This tag has no meaning and will be skipped unless the WHEREFIELD attribute has been specified. |
| SECTION | No | An identifier for the section in the data package |
| MULTIROW | No | Boolean field specifying whether multiple rows can be updated by the tag |
| MULTIROWIDENT | Yes | If the MULTIROW attribute is set to 'YES', this field is required and specifies the |

### 3.3.3.4 The <PKGFIELDS> tag

The <PKGFIELDS> ... </PKGFIELDS> tag pair marks where the fields in a given data package are defined. The PKGFIELDS tag has no attributes.

### 3.3.3.5 <The PKGFLD> tag

The <PKGFLD>...</PKGFLD> tag pair defines a single parameter in a given data package. Enclosed between the <PKGFLD>...</PKGFLD> tags is the field name. The <PKGFLD> tag has the following attributes;

| Attribute | Optional? | Description |
|---|---|---|
| NAME | No | This is the field in the AIRIX database that maps to the user interface field |
| PARAMTYPE | No | This defines the type of parameter. It can take two values; |
| | | PROP - this means that the parameter appears as part of the tag definition |
| | | VALUE - this means that the parameter is contained between the two tags. Only one parameter in a given data package can be of this type |

### 3.3.4 Example

Using the table definitions example in section 3.2.4, when the user sends an email, a data package to transport the data would update the 'SENTITEMS' table and the 'RECIPIENTS' table. The following ARML fragment defines such a data package;

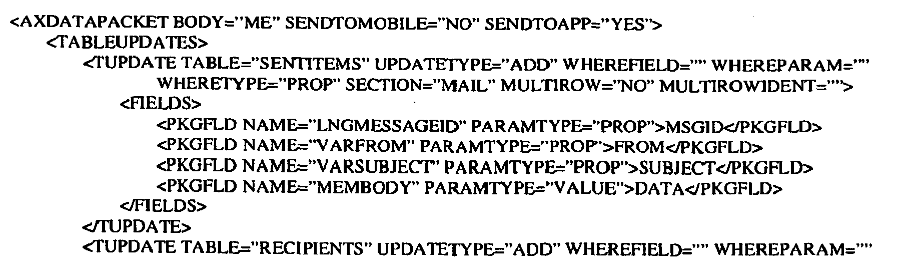

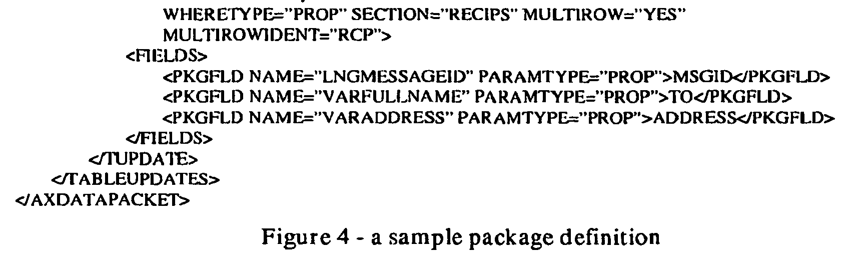

### 3.4 Device Interface Definitions Section

### 3.4.1 Description

The display definitions section contains the user interface definitions for the various mobile devices that an application supports.

### 3.4.2 Structure

The device display definitions section has the following structure;

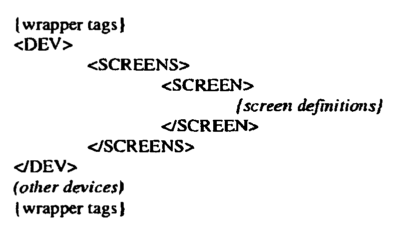

### 3.4.3 Tags

### 3.4.3.1 The <DEV> tag

The <DEV>...</DEV> pair delimits an interface definition for a specific device. The tag has the following attributes;

| Attribute | Optional? | Description |
|---|---|---|
| TYPE | No | The type of device. Allowed values are: |
| | | RIM - a Research in Motion Blackberry pager |
| | | WAP - a WAP phone |
| | | CE - Pocket PC |

### 3.4.3.2 The <SCREENS> tag

The <SCREENS>...</SCREENS> pair delimits the screens definition for a specific device. The tag has one attribute;

| Attribute | Optional? | Description |
|---|---|---|
| STSCRN | No | The that is displayed when the application starts first screen that is displayed when the application starts |

### 3.4.3.3 The <SCREEN> tag

The <SCREEN>...</SCREEN> pair, and its contents are described in section 5.1.3.1

### 3.4.4 Example

The following example shows the screen definitions section for an application that allows a user to view their inbox and the mails in it.

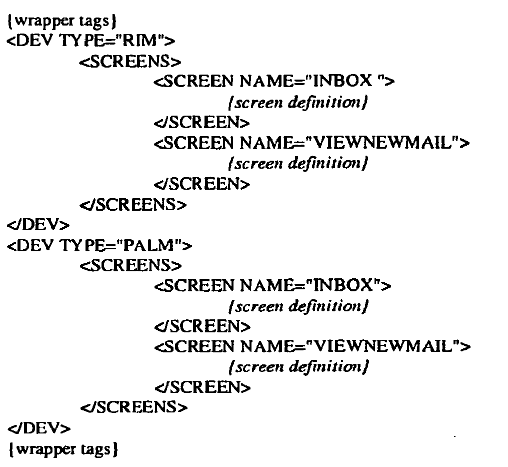

### 4 APPLICATION-DEFINED PACKAGES

This section describes the format of application defined packages.

### 4.1 General

This section describes the general structure of an application-specific data package. As described in section , ;

### 4.1.1 Description

System level packages are sent between AIRIX and the application server, and between AIRIX and the AVM

### 4.1.2 Structure

An application defined package has the following structure;

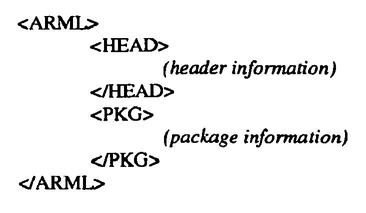

### 4.1.3 Tags

### 4.1.3.1 The <HEAD> tag

The <HEAD> tag is as described in section 7.1.3.1

### 4.1.3.2 The <PKG> tag

The <PKG>...</PKG> tags delimit the package data. The PKG tag has the following attributes;

| Attribute | Optional? | Description |
|---|---|---|
| TYPE | No | A text string identifying the type of package being sent |

### 4.2 Package information

The format and rules for application-defined data packages depend on the package definitions for that application.

### 4.2.1 Example

A sample data package following the rules in section 3.3.4 would have a body section like this;

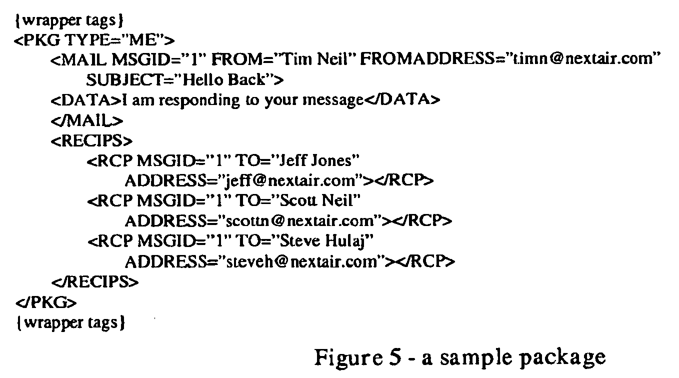

We will use this sample package to illustrate how packages are derived from the package definition file. The first tag in the package is the BODY tag. This tag defines which type of package it is;

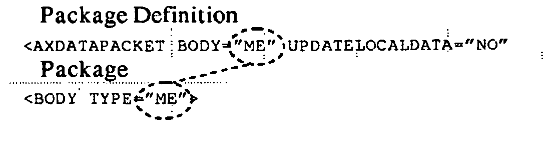

The package has two sections, which correspond to the two table update sections in the package definition;

### Package Definition

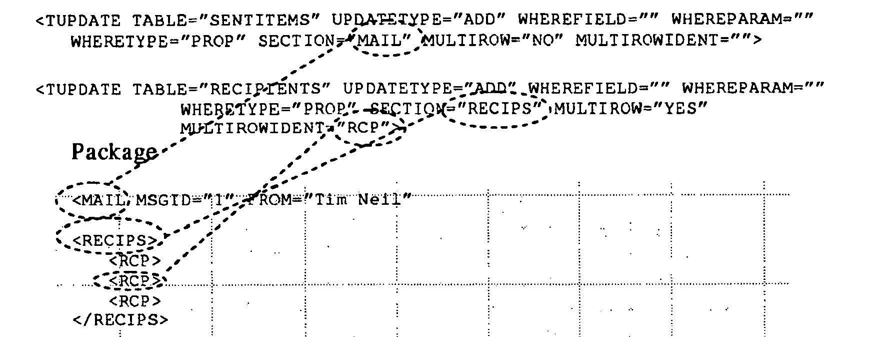

The 'MAIL' section updates the 'SENTITEMS' table in the database. It does not update multiple rows. The 'RECIPS' section updates the 'RECIPIENTS' table in the database; it does update multiple rows, and each row is contained within a pair of <RCP> tags.

Each of the MAIL and RCP tags have fields which are used to update the field in the database tables;

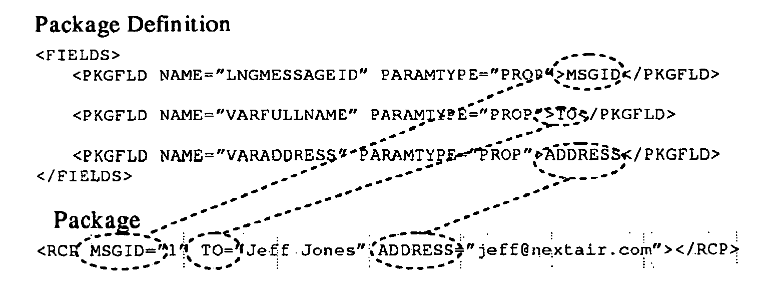

### 5 USER INTERFACE DEFINITIONS

### 5.1 General

### 5.1.1 Description

A screen definition file defines a single screen for a specific device.

### 5.1.2 Structure

A screen definition file has the following structure;

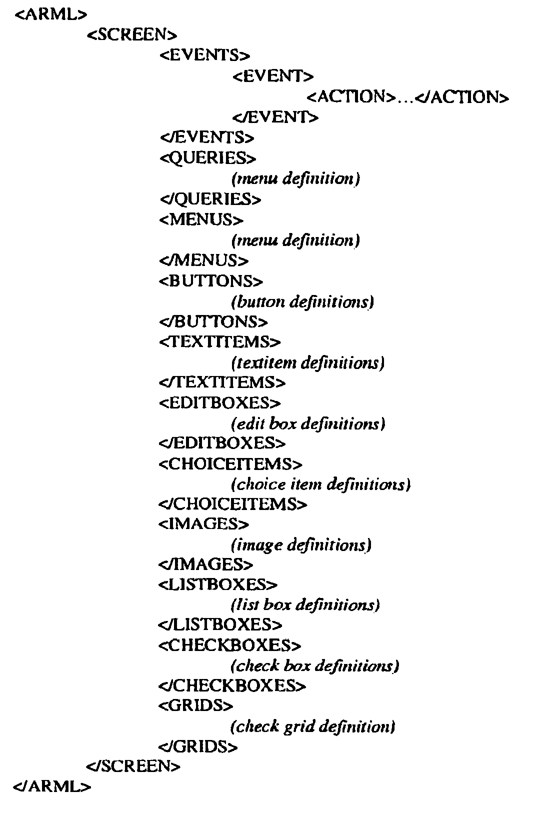

### 5.1.3 Tags

### 5.1.3.1 The SCREEN tag

The <SCREEN>...</SCREEN> pair marks the start and end of the screen definitions section. It has attribute -

| Attribute | Optional? | Description |
|---|---|---|
| NAME | No | An identifier for the screen. This is used to qualify variables and navigate between screens |
| TITLE | No | The title that appears for the screen. |
| BACKGROUND | Yes | If used, an image that appears behind the interface elements |
| ORDERED | Yes, only applicable on WAP | If yes, WML is created with ORDERED property set to true, if NO, WML is created with ORDERED property set to false. Only applicable on WAP. See WML standard for definition of ORDERED. |

### 5.1.3.2 The <EVENTS> tag

The <EVENT>...</EVENT> pair marks the start and end of a user-interface level event definition. See section 6 for a detailed discussion of the Smart Client event model.

### 5.1.3.3 The <EVENT> tag

The <EVENT> ... </EVENT> pair marks the start and end of a user-interface level event definition. See section 6 for a detailed discussion of the Smart Client event model.

### 5.1.3.4 The <ACTION> tag

The <ACTION>...</ACTION> pair marks the start and end of an action definition. See section 6 for a detailed discussion of the Smart Client event model.

### 5.1.3.5 The QUERIES tag

The <QUERIES> ... </QUERIES> pair marks the start and end of the queries definitions section. It has no attributes.

### 5.1.3.6 The MENUS tag

The <MENUS>...</MENUS> pair marks the start and end of the menu definition section. It has no attributes.

### 5.1.3.7 The BUTTONS tag

The <BUTTONS>...</BUTTONS> pair marks the start and end of the button definitions section. It has no attributes.

### 5.1.3.8 The TEXTITEMS tag

The <TEXTITEMS>... <TEXTITEMS> pair marks the start and end of the text items section. It has no attributes.

### 5.1.3.9 The EDITBOXES tag

The <EDITBOXES>...</EDITBOXES> pair marks the start and end of the editboxes section. It has no attributes.

### 5.1.3.10 The CHOICEITEMS tag

The <CHOICEITEMS>...</CHOICEITEMS> pair marks the start and end of the choiceitems section. It has no attributes.

### 5.1.3.11 The IMAGES tag

The <IMAGES>...</IMAGES> pair marks the start and end of the images section. It has no attributes.

### 5.1.3.12 The CHECKBOXES tag

The <CHECKBOXES>...</CHECKBOXES> pair marks the start and end of the checkboxes section. It has no attributes.

### 5.1.3.13 The LISTBOXES tag

The <LISTBOXES>...</LISTBOXES> pair marks the start and end of the listboxes section. It has no attributes.

### 5.1.3.14 The GRIDS tag

The <GRIDS>...</GRIDS> pair marks the start and end of the grids section. It has no attributes.

### 5.2 Queries definition section

### 5.2.1 Description

The queries definition section describes any queries that need to be run to populate a screen.

### 5.2.2 Structure

The queries definition section has the following structure;

```
 {wrapper tags }
 <QUERIES>
       <QUERY>
      <W>...</W>
       </QUERY>
 </QUERIES>
 {wrapper tags}
```

### 5.2.3 Tags

### 5.2.3.1 The <QUERIES> tag

The <QUERIES> ... </QUERIES> pair marks the start and end of query definition section. It has no attributes.

### 5.2.3.2 The <QUERY> tag

The <QUERY>...</QUERY> pair marks the start and end of a given query. It has the following attributes;

| Attribute | Optional? | Description |
|---|---|---|
| NAME | No | Name of the query. |
| TABLE | No | The table in the database that is updated |
| ORDERBY | Yes | Specifies the name of the field in the table that the results are to be ordered on. |
| ORDERDIR | Yes | ASC or DESC, sort ascending or descending respectively. If ORDERBY is present and ORDERDIR is not, ASC is assumed. |

### 5.2.3.3 The <W> tag

The <W>...</W> pair marks the start and end of a given where-clause. The value of the parameter is contained within the <W>...</W> tags. This value can be a specific value or a reference to a user interface field in the format "[SP.screen.savename] or [QU.query.field]". It has the following attributes;

| Attribute | Optional? | Description |
|---|---|---|
| F | No | Specifies the field to match on. |
| E | No | Specifies the expression type. Available expression types include: |
| | | EQ |
| | | NE |
| | | LT |
| | | GT |
| | | BW (applicable only to fields of type STRING) |

### 5.3 Menu definition section

### 5.3.1 Description

The menu definition section describes the menu for a given screen.

### 5.3.2 Structure

The menu definition section has the following structure;

```
 {wrapper tags}
 <MENUS>
 <MENU>
      <MENUITEM>
             <EVENTS>
                     <EVENT>
                            <ACTION>...</ACTION>
                     </EVENT>
              </EVENTS>
      </MENUITEM>
 </MENU>
 </MENUS>
 {wrapper tags}
```

### 5.3.3 Tags

### 5.3.3.1 The <MENUS> tag

The <MENUS> ... </MENUS> pair marks the start and end of menu definition section. It has no attributes.

### 5.3.3.2 The <MENU> tag

The <MENU> ... </MENU> pair marks the start and end of a menu definition. It has the following attributes.

| Attribute | Optional? | Description |
|---|---|---|
| NAME | No | An internal identifier for the menu |
| CAPTION | No | The text that appears for this item in the menu |

### 5.3.3.3 The <MENUITEM> tag

The <MENUITEM>...</MENUITEM> pair marks the start and end of a menuitem definition. It has the following tags;

| Attribute | Optional? | Description |
|---|---|---|
| NAME | No | An internal identifier for the menu |
| CAPTION | No | The text that appears for this item in the menu |
| INDEX | Yes | The index of this menu item with respect to all of the menu items on this menu. |
| READONLY | Yes | If True, the menu item is inactive. False is the default. |

### 5.3.3.4 The <EVENTS> tag

The <EVENT>...</EVENT> pair marks the start and end of a user-interface level event definition. See section 6 for a detailed discussion of the Smart Client event model.

### 5.3.3.5 The <EVENT> tag

The <EVENT>...</EVENT> pair marks the start and end of a user-interface level event definition. See section 6 for a detailed discussion of the Smart Client event model.

### 5.3.3.6 The <ACTION> tag

The <ACTION>...</ACTION> pair marks the start and end of an action definition. See section 6 for a detailed discussion of the Smart Client event model.

### 5.4 Buttons definition section

### 5.4.1 Description

The buttons definition section describes the buttons that appear on a given screen.

### 5.4.2 Structure

The buttons definition section has the following structure;

```
 { wrapper tags }
 <BTN>
      <EVENTS>
             <EVENT>
                     <ACTION>...</ACTION>
             </EVENT>
      </EVENTS>
 </BTN>
 { wrapper tags }
```

### 5.4.3 Tags

### 5.4.3.1 The BTN tag

The <BTN>...</BTN> pair marks the start and end of a button definition. It has one attribute -

| Attribute | Optional? | Description |
|---|---|---|
| NAME | No | An identifier for the button. |
| INDEX | No | The order in which the button appears |
| CAPTION | No | The caption that appears on a given button |
| X | Yes | The X-coordinate of the button on the screen. This attribute may not be meaningful in some display environments, in which case it would be skipped without processing by the parser |
| Y | Yes | The Y-coordinate of the button on the screen. This attribute may not be meaningful in some display environments, in which case it would be skipped without processing by the parser |
| HT | Yes | This is the Height of the button. This attribute may not be meaningful in some display environments, in which case it would be skipped without processing by the parser |
| WT | Yes | This is the Width of the Button. This attribute may not be meaningful in some display environments, in which case it would be skipped without processing by the parser |
| READONLY | Yes | If True, the button is not enabled. False is the default. |

### 5.4.3.2 The <EVENTS> tag

The <EVENT>...</EVENT> pair marks the start and end of a user-interface level event definition. See section 6 for a detailed discussion of the Smart Client event model.

### 5.4.3.3 The <EVENT> tag

The <EVENT>...</EVENT> pair marks the start and end of a user-interface level event definition. See section 6 for a detailed discussion of the Smart Client event model.

### 5.4.3.4 The <ACTION> tag

The <ACTION>...</ACTION> pair marks the start and end of an action definition. See section 6 for a detailed discussion of the Smart Client event model.

### 5.5 Text Items definition section

### 5.5.1 Description

The text items definition

### 5.5.2 Structure

The text items section has the following structure;

```
 {wrapper tags}
 <TI>
       <EVENTS>
              <EVENTS>
                     <ACTION>...</ACTION>
              </EVENT>
       </EVENTS>
 </TI>
 {wrapper tags}
```

### 5.5.3 Tags

### 5.5.3.1 The TI tag

The <TI>...</TI> pair marks the start and end of the screen definitions section. It has attribute -

| Attribute | Optional? | Description |
|---|---|---|
| INDEX | No | The order in which the text item appears |
| NAME | No | An Identifier for the Text Item |
| CAPTION | No | Text to appear on the Text Item |
| X | Yes | The X-coordinate of the text item on the screen. This attribute may not be meaningful in some display environments, in which case it would be skipped without processing by the parser |
| Y | Yes | The Y-coordinate of the text item on the screen. This attribute may not be meaningful in some display environments, in which case it would be skipped without processing by the parser |
| HT | Yes | This is the Height of the Text Item. This attribute may not be meaningful in some display environments, in which case it would be skipped without processing by the parser |
| WT | Yes | This is the Width of the Text Item. This attribute may not be meaningful in some display environments, in which case it would be skipped without processing by the parser |

### 5.5.3.2 The <EVENTS> tag

The <EVENT>...</EVENT> pair marks the start and end of a user-interface level event definitio-n. See section 6 for a detailed discussion of the Smart Client event model.

### 5.5.3.3 The <EVENT> tag

The <EVENT>...</EVENT> pair marks the start and end of a user-interface level event definition. See section 6 for a detailed discussion of the Smart Client event model.

### 5.5.3.4 The <ACTION> tag

The <ACTION>...</ACTION> pair marks the start and end of an action definition. See section 6 for a detailed discussion of the Smart Client event model.

### 5.6 Edit boxes definition section

### 5.6.1 Description

The edit boxes definition section describes what edit boxes exist for the screen.

### 5.6.2 Structure

The edit boxes section has the following structure;

```
 {wrapper tags}
 <EB>
       <EVENTS>
              <EVENT>
                     <ACTION>...</ACTION>
              </EVENT>
       </EVENTS>
 </EB>
 {wrapper tags}
```

### 5.6.3 Tags

### 5.6.3.1 The EB tag

The <EB>...</EB> pair marks an edit box definition. It has the following attributes -

| Attribute | Optional? | Description |
|---|---|---|
| NAME | No | An identifier for the edit box. |
| TEXT | No | The text to display in the edit box before any entry has been made. Only used if the DATASRC attribute is invalid or omitted. Can be a scratchpad or query value of the form [SP.screen.savename] or [QU.query.field]. |
| INDEX | No | The order in which the edit box appears |
| CAPTION | No | The caption for on a given edit box. |
| MULTILINE | No | Boolean field that indicates whether the edit box is a multiline field. |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the edit box on the screen. This attribute may not be meaningful in some display environments, in which case it would be skipped without processing by the parser |
| Y | Yes | The Y-coordinate of the edit box on the screen. This attribute may not be meaningful in some display environments, in which case it would be skipped without processing by the parser |
| HT | Yes | The Height of the Edit Box. This attribute may not be meaningful in some display environments, in which case it would be skipped without processing by the parser |
| WT | Yes | The Width of the Edit Box. This attribute may not be meaningful in some display environments, in which case it would be skipped without processing by the parser |
| FT | Yes | Specifies the type of value expected (INT, STRING, MEMO,DATETIME) for the VM to validate prior to continuing a Save. If omitted, STRING is the default data type. |
| DATASRC | Yes | If present, the query and field in the query that populates this edit box. This is given in the format "query.field". |
| READONLY | Yes | If "TRUE" the edit box will be read only, otherwise it is editable. "FALSE is the default value. |

### 5.6.3.2 The <EVENTS> tag

The <EVENT>...</EVENT> pair marks the start and end of a user-interface level event definition. See section 6 for a detailed discussion of the Smart Client event model.

### 5.6.3.3 The <EVENT> tag

The <EVENT>...</EVENT> pair marks the start and end of a user-interface level event definition. See section 6 for a detailed discussion of the Smart Client event model.

### 5.6.3.4 The <ACTION> tag

The <ACTION>...</ACTION> pair marks the start and end of an action definition. See section 6 for a detailed discussion of the Smart Client event model.

### 5.7 Choice items definition section

### 5.7.1 Description

The choice item definitions section describes the choice items that exist on a given screen. A choice item is an interface item that requires the user to make a selection from a list of options. It can be represented in different ways on different devices; on a RIM pager, it is a choice box, while on a WinCE device, it is a drop-down list.

### 5.7.2 Structure

The choice items section has the following structure;

```
 {wrapper tags}
 <CHOICE>
      <EVENTS>
              <EVENT>
                     <ACTION>...</ACTION>
              </EVENT>
      </EVENTS>
      <ITEMS>
              <I>...</I>
      </ITEMS>
 </CHOICE>
 {wrapper tags}
```

### 5.7.3 Tags

### 5.7.3.1 The <CHOICE> tag

The <CHOICE>...<CHOICE> pair marks the start and end of a choice item definition. It has these attributes -

| Attribute | Optional? | Description |
|---|---|---|
| NAME | No | An identifier for the choice item. |
| TEXT | No | The text to display in the choice item before any selection has been made. |
| INDEX | No | The order in which the choice item appears |
| CAPTION | No | The caption that appears for a given choice item |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the choice item on the screen. This attribute may not be meaningful in some display environments, in which case it would be skipped without processing by the parser |
| Y | Yes | The Y-coordinate of the choice item on the screen. This attribute may not be meaningful in some display environments, in which case it would be skipped without processing by the parser |
| DATASRC | Yes | If present, the query and field in the query that populates this choice item. This is given in the format "query.field". |
| IDDATASRC | Yes | If present, the query and field in the query that populates the Ids for this choice item. This is given in the format "query.field". The ID values created by the attributes should correspond directly to the choice item values. I.e. they should create a value, id pair. |
| READONLY | Yes | If "True", the control cannot be modified. "False" is the default. |
| SI | Yes | The value to indicate which item of the choice item is to be selected when loaded. This value will be compared with the ID property (hard-coded items) or the IDDATASRC property (database items). |

### 5.7.3.2 The <ITEMS> tag

The <ITEMS>...</ITEMS> pair marks the start and end of a list of items to be included in the in the choice item. If a datasrc is specified, the <ITEMS> section is ignored.

### 5.7.3.3 The <I> tag

The <I>...</I> pair marks the start and end of an individual item in the choice items list. It has the following attributes:

| Attribute | Optional? | Description |
|---|---|---|
| ID | Yes | An id used to identify this item in the list. |

The value between the pair is the text value that is to be displayed in the choice item.

### 5.7.3.4 The <EVENTS> tag

The <EVENT>...</EVENT> pair marks the start and end of a user-interface level event definition. See section 6 for a detailed discussion of the Smart Client event model.

### 5.7.3.5 The <EVENT> tag

The <EVENT>...</EVENT> pair marks the start and end of a user-interface level event definition. See section 6 for a detailed discussion of the Smart Client event model.

### 5.7.3.6 The <ACTION> tag

The <ACTION>...</ACTION> pair marks the start and end of an action definition. See section 6 for a detailed discussion of the Smart Client event model.

### 5.8 Checkboxes definition section

### 5.8.1 Description

The checkboxes section describes a check box that appears on a given screen.

### 5.8.2 Structure

The checkboxes section has the following structure;

```
 {wrapper tags}
      <CHK>
              <EVENTS>
                     <EVENT>
                            <ACTION>...</ACTION>
                     </EVENT>
              </EVENTS>
      </CHK>
 {wrapper tags}
```

### 5.8.3 Tags

### 5.8.3.1 The CHK tag

The <CHK>...</CHK> pair marks a check box definition

| Attribute | Optional? | Description |
|---|---|---|
| NAME | No | An identifier for the check box. |
| INDEX | No | The index of this control with respect to the list of all controls on the screen. |
| CAPTION | No | The text to be displayed for this check box if the DATASRC is not available or is not specified. |
| Save | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the check box on the screen. This attribute may not be meaningful in some display environments, in which case it would be skipped without processing by the parser |
| Y | Yes | The Y-coordinate of the check box on the screen. This attribute may not be meaningful in some display environments, in which case it would be skipped without processing by the parser |
| HT | Yes | The Height of the Checkbox. This attribute may not be meaningful in some display environments, in which case it would be skipped without processing by the parser |
| WT | Yes | The Width of the Checkbox. This attribute may not be meaningful in some display environments, in which case it would be skipped without processing by the parser |
| DATASRC | Yes | If present, the query and field in the query that populates this check box. This is given in the format "query.field". |
| VALUE | Yes | If present, specifies the initial state of the check box ('TRUE' = checked, 'FALSE' = Unchecked. If unspecified, FALSE is the default value. |
| READONLY | Yes | If "TRUE" the check box cannot be modified. "FALSE" is the default value. |

### 5.8.3.2 The <EVENTS> tag

The <EVENT>...</EVENT> pair marks the start and end of a user-interface level event definition. See section 6 for a detailed discussion of the Smart Client event model.

### 5.8.3.3 The <EVENT> tag

The <EVENT>...</EVENT> pair marks the start and end of a user-interface level event definition. See section 6 for a detailed discussion of the Smart Client event model.

### 5.8.3.4 The <ACTION> tag

The <ACTION>...</ACTION> pair marks the start and end of an action definition. See section 6 for a detailed discussion of the Smart Client event model.

### 5.9 Listboxes definition section

### 5.9.1 Description

The listboxes section describes a list box that appears on a given screen.

### 5.9.2 Structure

The listboxes section has the following structure;

```
 {wrapper tags}
       <LB>
              <EVENTS>
                      <EVENT>
                             <ACTION> ... <ACTION>
                      </EVENT>
              </EVENTS>
               <ITEMS>
                      <I>...</I>
              </ITEMS>
       </LB>
 {wrapper tags}
```

### 5.9.3 Tags

### 5.9.3.1 The LB tag

The <LB>...</LB> pair marks a list box definition

| Attribute | Optional? | Description |
|---|---|---|
| NAME | No | An identifier for the list box. |
| INDEX | No | The index of this control with respect to all of the controls on the screen. |
| CAPTION | No | The text to be displayed as the title of this list box, where applicable. |
| SAVE | No | Boolean value indicating whether or not to save the value in this field to temporary storage for use by other screens later on. Saving the value to the scratchpad is triggered by either exiting the screen or by an explicit 'SAVE' action on a user interface control. |
| SAVENAME | Yes | If present, the name to save the field under in the scratchpad. This attribute has no meaning unless the SAVE attribute is set to 'Yes' |
| X | Yes | The X-coordinate of the list box on the screen. This attribute may not be meaningful in some display environments, in which case it would be skipped without processing by the parser |
| Y | Yes | The Y-coordinate of the list box on the screen. This attribute may not be meaningful in some display environments, in which case it would be skipped without processing by the parser |
| HT | Yes | The Height of the Listbox. This attribute may not be meaningful in some display environments, in which case it would be skipped without processing by the parser |
| WT | Yes | The Width of the Listbox. This attribute may not be meaningful in some display environments, in which case it would be skipped without processing by the parser |
| DATASRC | Yes | If present, the query and field in the query that populates this list box. This is given in the format "query.field". |
| IDDATASRC | Yes | If present, the query and field in the query that populates the list box Ids. This is given in the format "query.field". This value will create a list of ID values that correspond to the list box values in DATASRC. I.e. they should create a value, id pair. |
| READONLY | Yes | If "TRUE" the list box cannot be modified. "FALSE" is the default. |
| SI | Yes | The value to indicate which item of the choice item is to be selected when loaded. This value will be compared with the ID property (hard-coded items) or the IDDATASRC property (database items). |

### 5.9.3.2 The <ITEMS> tag

The <ITEMS>...</ITEMS> pair marks the start and end of a list of items to be included in the in the list box. If a datasrc is specified, the <ITEMS> section is ignored.

### 5.9.3.3 The <I> tag

The <I>...</I> pair marks the start and end of an individual item in the list box items list. It has the following attributes:

| Attribute | Optional? | Description |
|---|---|---|
| ID | Yes | An id used to identify this item in the list. |

The value between the pair is the text value that is to be displayed in the list box. Can be a scratchpad or query value of the form [SP.screen.savename] or [QU.query.field].

### 5.9.3.4 The <EVENTS> tag

The <EVENT>...</EVENT> pair marks the start and end of a user-interface level event definition. See section 6 for a detailed discussion of the Smart Client event model.

### 5.9.3.5 The <EVENT> tag

The <EVENT>...</EVENT> pair marks the start and end of a user-interface level event definition. See section 6 for a detailed discussion of the Smart Client event model.

### 5.9.3.6 The <ACTION> tag

The <ACTION>...</ACTION> pair marks the start and end of an action definition. See section 6 for a detailed discussion of the Smart Client event model.

### 5.10 Grids

### 5.10.1 Description

Grids allow data to be displayed in row-column format. Grids can display data from a data source (query) or they can contain hard coded values. Each column in a grid can be visible or hidden. Hidden values are maintained, but not visible to the user.

### 5.10.2 Structure

The grids section has the following structure;

```
 {wrapper tags}
      <GRID>
              <COLS>
                     <COL> ... </COL>
              </COLS>
              <ROWS>
                     <R>
                             <V> ... </V>
                     </R>
              </ROWS>
       </GRID>
 {wrapper tags}
```

### 5.10.3 Tags

### 5.10.3.1 GRID Tag

<GRID>...</GRID> The grid item itself will have the following attributes

| Attribute | Optional? | Description |
|---|---|---|
| NAME | No | An identifier for the edit box. |
| INDEX | No | The order in which the edit box appears |
| X | Yes | The X-coordinate of the edit box on the screen. This attribute may not be meaningful in some display environments, in which case it would be skipped without processing by the parser |
| Y | Yes | The Y-coordinate of the edit box on the screen. This attribute may not be meaningful in some display environments, in which case it would be skipped without processing by the parser |
| HT | Yes | The Height of the Edit Box. This attribute may not be meaningful in some display environments, in which case it would be skipped without processing by the parser |
| WT | Yes | The Width of the Edit Box. This attribute may not be meaningful in some display environments, in which case it would be skipped without processing by the parser |
| GRDSRC | Yes | This is the Query on the screen that will provide the data to the grid. No field name will be specified in this value |

### 5.10.3.2 COLS Tag

<COLS>...</COLS> This tag contains no attributes. But instead contains all the columns that are associated with the grid in the order in which they appear from left to right.

### 5.10.3.3 COL Tag

<COL>...</COL> This tag will determine the column specification for the grid. The attributes for this item are the following:

| Attribute | Optional? | Description |
|---|---|---|
| CAPTION | Yes | This is the caption that appears at the top of the grid where applicable. |
| FIELDNAME | Yes | This field name represents the Field to pull information from out of the GRDSRC of the grid control. |
| SAVE | No | This true false value will be checked when the SAVE action is called to save values to the scratchpad |
| SAVENAME | Yes | This is the name in which the data will be saved when the SAVE action is called and the column is marked for Saving |
| WT | Yes | The Width of the Edit Box. This attribute may not be meaningful in some display environments, in which case it would be skipped without processing by the parser |

### 5.10.3.4 ROWS Tag

<ROWS>...</ROWS> This will Indicate any hard coded rows that would be created in the design studio. It does not contain any attributes but instead contains all the row definitions.

### 5.10.3.5 R Tag

<R>...</R> This is the row declaration that contains all the values for the row that has been hard coded. It has no attributes itself, but contains the value definitions for the row.

### 5.10.3.6 V Tag

<V>...</V> This definition contains the data that is related to the ROW and to the column.

### 5.10.4 Example

An example of a grid declaration is as follows:

```
 <GRID INDEX="2" NAME="mygrid" X="10" Y="50" HT="100" WT="100" GRDSRC="QUERY1">
 <COLS>
 <COL CAPTION="Id" FIELDNAME="IngID" SAVE="TRUE" SAVENAME="IngID" WT="20"></COL>
 <COL CAPTION="Subject" FIELDNAME="strSubject" SAVE="TRUE" SAVENAME="Sub" WT="80"></COL>
 </COLS>
 <ROWS>
  <R>
   <V>343432</V>
   <V>This is a subject</V>
  </R>
  <R>
   <V>5456</V>
   <V>This is another subject</V>
  </R>
 </ROWS>
 </GRID>
```

### 6 THE SMART CLIENT EVENT MODEL

The Smart Client has a set of actions that it ties to events. Events can occur at the application level, the screen level or the user interface item level; an application level event is listened for throughout the operation of the application, a screen level event is listened for while the screen is displayed, and so on. If an action for an event is defined at multiple levels, the lowest level has precedence; i.e., user interface actions override screen level actions, which override application level actions. An attempt to list an event multiple times at the same level (application, screen, item) is invalid and will generate an error message.
The following ARML fragment illustrates this schema (tags and attributes not relevant to the event model have been omitted);

```
        <AXTSCHDEF>
               <EVENTS>
                      <EVENT>
                              <ACTION>...</ACTION>
                              <ACTION>...</ACTION>
                      <EVENTS>
                      <EVENT>
                              <ACTION>...</ACTION>
                      </EVENT>
               </EVENTS>
               <INTERFACE>
                      <SCREEN>
                              <EVENT>
                                     <ACTION>...</ACTION>
                              </EVENT>
                             <EVENT>
                                     <ACTION>...</ACTION>
                              </EVENT>
                             <BUTTON>
                                     <EVENT>
                                            <ACTION>... </ACTION>
                                     </EVENT>
                                     <EVENT>
                                            <ACTION>...</ACTION>
                                     </EVENT>
                             </BUTTON>
                      </SCREEN>
               </INTERFACE>
       </AXTSCHDEF>
```

### 6.1 The EVENTS tag

The <EVENTS>...</EVENTS> pair marks the start and end of the events section. It has no attributes.

### 6.2 The EVENT tag

The <EVENT>...</EVENT> pair marks the start and end of an event definition. It has the following attributes;

| Attribute | Optional? | Description |
|---|---|---|
| TYPE | No | The type of event that should be performed when the button is pushed. |
| | | Allowed values are; |
| | | BUTTONCLICK |
| | | MENUITEMSELECTED |
| | | DATA |

### 6.2.1 The BUTTONCLICK event

The button click event occurs when the user selects a button. It has no attributes.

### 6.2.2 The MENUITEMSELECTED event

The menu items selected event occurs when the user selects a menu item. It has no attributes.

### 6.2.3 The DATA event

The data event occurs when ARML data is received from the wireless interface. It has the following attributes;

| Attribute | Optional? | Description |
|---|---|---|
| NAME | No | The identifier of the specific package |

### 6.3 The ACTION tag

The <ACTION>...</ACTION> pair marks the start and end of an event definition. It has one fixed attribute, and a number of attributes that may or may not appear depending on the type of action required. The fixed attribute is;

| Attribute | Optional? | Description |
|---|---|---|
| TYPE | No | The type of action that should be performed when the button is pushed. |
| | | Allowed values are; |
| | | OPEN |
| | | ARML |
| | | SAVE |
| | | PURGE |
| | | NOTIFY |
| | | CLOSE |
| | | ALERT |
| | | IF...Then...Else |
| | | CLOSESCREEN |
| | | REFRESH |
| | | SAVEITEM |

### 6.3.1 The OPEN action

The open action tells the Smart Client to open a new screen. It adds one extra attribute to the ACTION tag;

| Attribute | Optional? | Description |
|---|---|---|
| NAME | No | The name of the screen to open |
| NEWINST | Yes | If true, a new instance of the screen is created. If false, the least recently used instance of the screen is opened and the data is not refreshed. True is the default. |

### 6.3.2 The ARML action

The arml action tells the Smart Client to compose and send an arml package. It does not add any attributes to the ACTION tag, but has the following subtag;

### <ARMLTEXT>

Contained between the <ARMLTEXT>...</ARMLTEXT> pair is one of the application-defined data packages. Individual data items are marked with the user interface item that their value should be taken from, in the format *"*[SP*.screen.savename]",* or [QU*.query.field].* If *screen* is not the current screen, then the Smart Client will look for the data in its scratchpad. See section 0 for an example of the ARML action.

### 6.3.3 The SAVE action

The save action tells the Smart Client to save all fields marked as persistent (i.e., they are defined with SAVE="Yes") to be saved to the scratchpad area. It has no attributes.

### 6.3.4 The PURGE action

The purge action tells the Smart Client to clear all fields that have been saved to the scratchpad. It has no attributes.

### 6.3.5 The NOTIFY action

The notify action tells the Smart Client to activate the configured notification on a device. For devices where this has no meaning, it will cause a beep to be played. It has no attributes.

### 6.3.6 The CLOSE action

The close action tells the Smart Client to close the application. It has no attributes.

### 6.3.7 The ALERT action

The alert action tells the Smart Client to display an alert item (e.g., a message box on Windows, an alert box on the RIM pager, an alert card on WAP). It has the following attributes;

| Attribute | Optional? | Description |
|---|---|---|
| CAPTION | Yes | The caption to display in the title bar of the message box |
| TEXT | Yes | The text to display in the message box |

### 6.3.8 The INTEGRATION action

The integration action tells the Smart Client to pass data to an interface exposed on a device. For example a COM interface on Pocket PC. This action will allow the developer to pass a parameter into an exposed method and then also save the result of that method in a global scratchpad value. The contents of the integration action's element are the input values to be passed to the interface. It has the following attributes;

| Attribute | Optional? | Description |
|---|---|---|
| CLSID | No | This is the class identifier of the component that is to be called. |
| SAVE | No | This tells the smart client if it should save the result into a global scratchpad value or not. |
| SAVENAME | Yes | This is the name of the global scratchpad value |

### Example ARML:

<ACTION TYPE="INTEGRATION" CLSID="*AirixSignature.AirixSignatureCtrl*" SAVENAME="" SAVE="*FALSE*">[*SP. *.SIGNATURE*]</ACTION>

### 6.3.9 The CLOSESCREEN action

The close screen action tells the Smart Client to close all open instances of the screen specified by name in the NAME attribute. This action has the following attributes:

| Attribute | Optional? | Description |
|---|---|---|
| NAME | No | Name of the screen to close. |

### 6.3.10 The REFRESH action

The refresh action tells the Smart Client to re-run any queries and re-initialize all UI elements on the screen with the name specified by the NAME attribute. If there are multiple open instances of the screen, all open instances will be refreshed. The refresh action has the following attributes:

| Attribute | Optional? | Description |
|---|---|---|
| NAME | No | Name of the screen to refresh. |

### 6.3.11 The SAVEITEM action

The saveitem action tells the Smart Client to create a new scratchpad item or to edit an existing scratchpad item. The value of the scratchpad item is defined within the <ACTION>...</ACTION> tags. The saveitem action has the following attributes:

| Attribute | Optional? | Description |
|---|---|---|
| SPN | No | Name of the scratchpad item to create or modify. |

### 6.3.12 The IF Action

This action will contain two lists of actions. One a list of actions to perform if the condition evaluates to TRUE (IFLIST), and another list of actions to perform if the condition evaluates to FALSE (ELSEIFLIST).

The structure of the action is as follows:

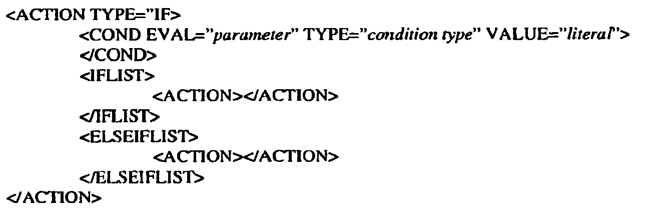

### 6.3.12.1 Conditions (COND)

Conditions are used in conjunction with the IF Action. Conditions are specified as follows:

| Attribute | Optional? | Description |
|---|---|---|
| EVAL | NO | Specifies the parameter to be evaluated. Can be hard coded, scratchpad, or query values. It is the "input" to the function. |
| TYPE | NO | Specifies the type of the condition. Possible values are: |
| | | LESSTHAN |
| | | MORETHAN |
| | | EQUALS |
| | | ISNUMERIC |
| | | ISALPHA |
| | | ISEMAIL |
| | | ISFORMAT |
| | | MAXCHARS |
| | | MINCHARS |
| VALUE | Depends on TYPE | The value that EVAL will be evaluated against. Not relevant for all conditions. |

The following is a description of each of the supported conditions:
- EQUALS, this function will take an input and a value to evaluate the input against.
   If the two items are determined to be Equal, the condition will return true. If they are not equal, the condition will return false. The value and the input must be of the same data type, otherwise the condition will return false. Memo values will be treated as a string and auto-increment types will be treated as integers. The following criteria will be used to determine equality:
   o Two strings are equal if each of the characters in the strings is identical and the strings have the same number of characters. The string comparison will not be case sensitive.
   o Two integers are equal if their values are mathematically equal.
- MORETHAN, this function will take an input and a value to evaluate the input against. If the input is determined to be greater in value than the evaluation value, the condition will return true. If the values are equal, false is returned. If the evaluation value is determined to be greater than the input, the function will return false. The evaluation value and the input must be of the same data type, otherwise an error condition will occur. Memo values will be treated as a string and the auto-increment type will be treated as an integer. The following criteria will be used to determine which value is greater:
   o String A is more in value than String B if String A occurs before String B in alphabetical order.
   o Integer A is greater than Integer B if A > B, mathematically.
- LESSTHAN, this function will take an input and a value to evaluate the input against. If the input is determined to be lesser in value than the evaluation value, the condition will return true. If the values are equal, false is returned. If the evaluation value is determined to be lesser than the input, the function will return false. The evaluation value and the input must be of the same data type, otherwise an error condition will occur. Memo values will be treated as a string and the auto-increment type will be treated as an integer. The following criteria will be used to determine which value is greater:
   o String A is lesser in value than String B if String A occurs after String B in alphabetical order.
   o Integer A is greater than Integer B if A < B, mathematically.
- ISNUMERIC, this function will take an input and evaluate whether or not it is a value number. If the input can be converted successfully to a number, the function will return true. If the input cannot be converted to a number, the function will return false. All input values will be treated as a string data type.
- ISALPHA, this function will take an input and evaluate whether or not it contains only alphabetic characters. Alphabetic characters are defined as all characters from A-Z, a-z" and spaces. All input values will be treated as a string data type.
- ISEMAIL, this function will take an input and evaluate whether or not it contains a string of the form *something@something.* All input values will be treated as a string data type.
- ISFORMAT, this function will take an input and a value to evaluate the input against. If the input is determined to be formatted as the evaluation value, the condition will return true. If the evaluation value is determined to be formatted differently than the input, the function will return false. The evaluation value must comply with the ARML formatting standards.
- MAXCHARS, this function will take an input and evaluate whether or not the number of characters in the string is less than or equal to the evaluation value passed into the function. If the number of characters in the string is less than or equal to the evaluation value, true is returned. If the number of characters in the string is greater than the evaluation value, false is returned. All input values will be treated as a string data type.
- MINCHARS, this function will take an input and evaluate whether or not the number of characters in the string is greater than or equal to the evaluation value passed into the function. If the number of characters in the string is greater than or equal to the evaluation value, true is returned. If the number of characters in the string is less than the evaluation value, false is returned. All input values will be treated as a string data type.

### Example:

```
 <ACTION TYPE="IF">
       <COND EVAL="[QUERY1.STRREAD]"TYPE="EQUALS" VALUE="READ"></COND>
       <IFLIST>
              <ACTION TYPE="SAVE'></ACTION>
              <ACTION TYPE="OPEN" NAME="INBOX" NEWINST="FALSE"></ACTION>
       </IFLIST>
       <ELSELIST>
              <ACTION TYPE="OPEN" NAME="MSGREAD" NEWINST="FALSE"></ACTION>
       </ELSELIST>
 </ACTION>
```

### Example of airix event model

The following example serves to illustrate how a screen is used to compose a data package to be sent back to the AIRIX server. The example used is a screen giving the bare functionality for composing a basic email message - to simplify the example, the user cannot cancel the action, and multiple recipients are not allowed.

```
 <ARML>
   <SCREEN NAME="NewMsg">
       <BUTTONS>
           <BTN NAME="OK" CAPTION="Send" INDEX="0">
              <EVENTS>
                  <EVENT TYPE="MODIFY">
                      <ACTION TYPE="ARML">
                         <ARMLTEXT>
                             <BODY TYPE="ME">
                                 <ME MSGID="1" FROM='"Tim Neil"
                                     SUBJECT="[SP.NewMsg.Subject]">
                                     <DATA>[SP.NewMsg.Body]</DATA>
                                     <RECIPS>
                                      <RCP MSGID="1"
                      TO="[SP.NewMsg.To]"></RCP>
                                     </RECIPS>
                                 </ME>
                             </BODY>
                         </ARMLTEXT>
                      </ACTION>
                 </EVENT>
              </EVENTS>
          </BTN>
      </BUTTONS>
      <EDITBOXES>
          <EB NAME="To" INDEX="1"></EB>
          <EB NAME="Subject" INDEX="2"></EB>
          <EB NAME="Body" INDEX="3"></EB>
      </EDITBOXES>
   </SCREEN>
 </ARML>
```

The Editboxes section at the bottom defines 3 editboxes, with the names of 'To', 'Subject', and 'Body';
<EB NAME="To" INDEX="1"></EB>
<EB NAME="Subject" INDEX="2"></EB>
<EB NAME="Body" INDEX="3"></EB>

There is one button on the screen, with the name of 'OK';
<BTN NAME="OK" CAPTION="Send" INDEX="0">

When the user clicks on OK, the button composes an ARML package to be sent to the AIRIX server;
<EVENT>
<ACTION TYPE="ARML">

The ARML package sent is an 'ME' package as described in the example in section 4.2.1. It is composed as follows;

```
                         <BODY TYPE="ME">
                             <ME MSGID="1" FROM="Tim Neil"
                                SUBJECT="[SP.NewMsg.Subject]">
                                <DATA>[SP.NewMsg.Body]</DATA>
                                <RECIPS>
                                    <RCP MSGID="1" TO="[SP.NewMsg.To]"></RCP>
                                </RECIPS>
                             </ME>
                         </BODY>
```

The subject field is taken from the edit box named 'Subject';

```
       <ME MSGID="1" FROM="Tim Neil" SUBJECT="[SP.NewMsg.Subject]">
```

The recipients field is taken from the edit box named 'Subject';

```
       <RECIPS>
           <RCP MSGID="1" TO="[SP.NewMsg.To]"></RCP>
       </RECIPS>
```

Finally the text of the message is filled from the 'Body' field;

```
       <DATA>[SP.NewMsg.Body]</DATA>
```

### 7 AVM-SERVER SYSTEM INTERACTIONS

This section describes the primitives that are used for system-level interactions that the AIRIX Smart Client has with the AIRIX server.

### 7.1 General

### 7.1.1 Description

System level packages are sent between AIRIX and the AVM (wirelessly).

### 7.1.2 Structure

System interactions are performed by exchanging ARML data packages with the following structure;

```
 <ARML>
 <HEAD>...</HEAD>
 <SYS>
 {data}
 {data}
 </SYS>
 </ARML>
```

### 7.1.3 Tags

### 7.1.3.1 The <HEAD> tag

The package header is delimited by the <HEAD>...</HEAD> tags. Contained in text between the two tags is the id of the destination mobile. The HEAD tag has the following attributes;

| Attribute | Optional? | Description |
|---|---|---|
| DT | No | The date & time in RFC 1123 format (including time zone) |
| ID | No | A unique ID for the message |
| VERSION | No | The version number of the application (currently "2.0") |
| APPNAME | No | The application name ("0" for System Messages) |
| DEVICE | No | A numeric constant identifying the device |
| PID | Yes | A unique value used to designate a device. |
| AVMV | No | The version number of the Smart Client. |

### 7.1.3.2 The <SYS> tag

The <SYS>...</SYS> pair contains the actual system package. The tag does not have any attributes.

### 7.2 Device Registration & deregistration package

### 7.2.1 Description

Device registration packages are sent from the AVM to the AIRIX server when a user registers their device.

### 7.2.2 Structure

A device registration package has the following structure;

```
 {wrapper tags}
 <REG>
       <USERNAME> {data} </USERNAME>
       <PASSWORD> {data} </PASSWORD>
 </REG>
 {wrapper tags}
```

### 7.2.3 Tags

### 7.2.3.1 The <REG> tag

The <REG>...</REG> pair delimit the registration request. The tag has no attributes.

### 7.2.3.2 The <USERNAME> tag

The <USERNAME>... </ USERNAME > pair contain the user name. The tag does not have any attributes.

### 7.2.3.3 The <PASSWORD> tag

The <PASSWORD>...</PASSWORD> pair contain the password. The tag does not have any attributes.

### 7.2.4 Example

This package would be sent by a user, to register their device under a given name;

```
 {wrapper tags}
 <REG>
       <USERNAME>SUNTRESS</USERNAME>
       <PASSWORD>MYPASS</PASSWORD>
 </REG>
 {wrapper tags}
```

### 7.3 Registration confirmation package

### 7.3.1 Description

This packages is sent back from the AIRIX server to the AVM to confirm that the device has been registered.

### 7.3.2 Structure

A registration confirmation package has the following structure;

```
 {wrapper tags}
 <REGCONFIRM>
       <VALUE> {data} </VALUE>
       <APPS>
              <APP></APP>
              <APP></APP>
       </APPS>
 </REGCONFIRM>
 {wrapper tags}
```

### 7.3.3 Tags

### 7.3.3.1 The <REGCONFIRM> tag

The <REGCONFIRM>...</REGCONFIRM> pair delimit the confirmation. The tag has no attributes.

### 7.3.3.2 The <VALUE> tag

The <VALUE>...</VALUE> pair contains the status of the registration request. The following text strings are allowable;
CONFIRM - this means that the registration request was successful
NOTREGPLATFORM - this means that the registration request failed because the device is not registered for the platform
INVALIDUSERPASS - this means that the registration request failed because the user name or password was not valid
NODEVICE - this means that the registration request failed because the device was not registered previously by an application

### 7.3.3.3 The <APPS> tag

The <APPS>...</APPS> pair contains a list of applications for the device.

### 7.3.3.4 The <APP> tag

The <APP>...</APP> pair contains an application header. It has the following attributes;

| Attribute | Optional? | Description |
|---|---|---|
| ID | No | The application ID |
| NAME | No | The name of the application |
| DESCRIPTION | No | A text description of the application |
| REG | No | 'YES' if the user is registered for this application. 'NO' if they are not. |

### 7.3.4 Example

This package would be sent to confirm the example request in section 7.2.4; { wrapper tags }

```
 <REGCONFIRM>
       <VALUE>CONFIRM</VALUE>
       <APPS>
           <APP ID="4" NAME="EMAIL" DESCRIPTION="E-Mail Application" REG="YES">
           <APP ID="22" NAME="STOCKS" DESCRIPTION="Stock Quotes" REG="NO">
       </APPS>
 </REGCONFIRM>
 {wrapper tags}
```

### 7.4 Find applications package

### 7.4.1 Description

Find applications packages are sent from the AIRIX component to the AIRIX server when a user wishes to refresh their list of applications on a device

### 7.4.2 Structure

A device registration package has the following structure;

```
 {wrapper tags}
 <FINDAPPS>
 </FINDAPPS>
 {wrapper tags}
```

### 7.4.3 Tags

### 7.4.3.1 The <FINDAPPS> tag

The <FINDAPPS>...</FINDAPPS> pair delimit the application registration request. It has no attributes.

### 7.5 Find applications confirmation package

### 7.5.1 Description

This package is sent back from the AIRIX server to the AVM to and contains a list of applications available for the user

### 7.5.2 Structure

A registration confirmation package has the following structure;

```
 {wrapper tags}
 <FINDAPPSCONFIRM>
      <APPS>
              <APP></APP>
              <APP></APP>
      </APPS>
 </FINDAPPSCONFIRM>
 {wrapper tags}
```

### 7.5.3 Tags

### 7.5.3.1 The <FINDAPPSCONFIRM> tag

The <FINDAPPSCONFIRM>...</FINDAPPSCONFIRM> pair delimit the confirmation. The tag has no attributes.

### 7.5.3.2 The <APPS> tag

The <APPS>...</APPS> pair contains a list of applications for the device.

### 7.5.3.3 The <APP> tag

The <APP>...</APP> pair contains an application header. It has the following attributes;

| Attribute | Optional? | Description |
|---|---|---|
| ID | No | The application ID |
| NAME | No | The name of the application |
| DESCRIPTION | No | A text description of the application |
| REG | No | 'YES' if the user is registered for the application. 'NO' if they are not. |

### 7.6 Application Registration & deregistration package

### 7.6.1 Description

Application registration packages are sent from the AIRIX component to the AIRIX server when a user wishes to register or deregister for an application.

### 7.6.2 Structure

A device registration package has the following structure;

```
 {wrapper tags}
 <APPREG>
 </APPREG>
 {wrapper tags}
```

### 7.6.3 Tags

### 7.6.3.1 The <APPREG> tag

The <APPREG>...</APPREG> pair delimit the application registration request. The tag has the following attributes;

| Attribute | Optional? | Description |
|---|---|---|
| TYPE | No | This defines the type of parameter. It can take two values; |
| | | ADD - this means that the application is to be added to the registration database |
| | | DELETE - this means that the application is to be removed to the registration database |
| ID | No | The ID of the application being registered/deregistered |

### 7.7 Application registration & deregistration confirmation package

### 7.7.1 Description

This packages is sent back from the AIRIX server to the AVM to confirm that the applicaiton has been registered or deregistered.

### 7.7.2 Structure

A registration confirmation package has the following structure (note that for DELETE types, the <INTERFACE>...</INTERFACE> section will not be included);

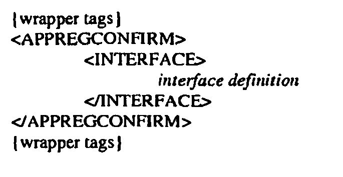

### 7.7.3 Tags

### 7.7.3.1 The <APPREGCONFIRM> tag

The <APPREGCONFIRM>...</APPREGCONFIRM> pair delimit the confirmation. The tag has the following attributes;

| Attribute | Optional? | Description |
|---|---|---|
| TYPE | No | This defines the type of parameter. It can take two values; |
| | | ADD - this means that the application is to be added to the registration database |
| | | DELETE - this means that the application is to be removed to the registration database |
| ID | Yes | The ID of the application being returned (if any) |

### 7.7.3.2 The <INTERFACE> tag

The <INTERFACE>...</INTERFACE> pair delimit the interface definition. The tag has the no attributes, and contains an interface definition as laid out in section 3. Note that instead of the <DEVICES>...</DEVICES> tags in section 3.1.3.6, it will be replaced by <SCREENS>...<SCREENS> with the screen definitions for only the one device that the interface is being sent to (see section 3.4.3.2 for the definition of the <SCREENS> tag). This section will not be sent for APPREGCONFIRM messages of TYPE="DELETE".

### 7.7.4 Example

The following example shows the application confirmation with screen definitions for an application that allows a user to view their inbox and the mails in it.

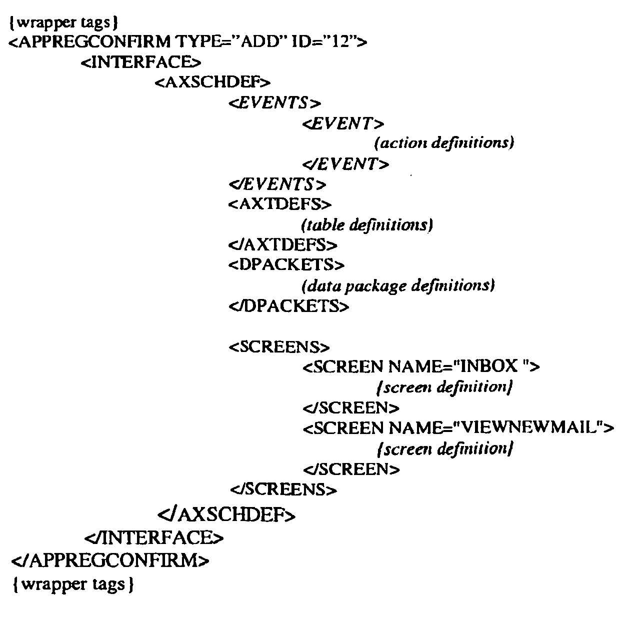

### 7.8 Setting the active device package

### 7.8.1 Description

If a user wishes to set the current device as their active device, the AVM must send a 'set active device' package to the AIRIX server

### 7.8.2 Structure

A 'set active device' package has the following structure;

```
 { wrapper tags }
 <SA>
 { data }
 </SA>
 { wrapper tags }
```

### 7.8.3 Tags

### 7.8.3.1 The <SA> tag

The 'set active device' package is shown by the <SA>...</SA> tags. The tag has no attributes; the tag pair contains the user's usemame

### 7.8.4 Example

This package would be sent by a user with the usemame of 'scotty';

```
{ wrapper tags }
 <SA>scotty</SA>
 { wrapper tags }
```

### 7.9 Set active device response

### 7.9.1 Description

This packages is sent back from the AIRIX server to the client in response to a request to set the current device as the active one.

### 7.9.2 Structure

A 'set active device response' package has the following structure;

```
 { wrapper tags }
 <SACONFIRM>
       <VALUE> {data} </VALUE>
 </SACONFIRM>
 { wrapper tags }
```

### 7.9.3 Tags

### 7.9.3.1 The <SACONFIRM> tag

The <SACONFIRM>...</SACONFIRM> pair delimit the confirmation. The tag does not have any attributes.

### 7.9.3.2 The <VALUE> tag

The <VALUE>...</VALUE> pair contains the status of the registration request. The following text strings are allowable;
CONFIRM - this means that the registration request was successful
NOTREGISTERED - this means that the registration request failed because

### 7.9.4 Example

This package would be sent by the AIRIX server to confirm a set active request;

```
 { wrapper tags }
 <SACONFIRM>
       <VALUE>CONFIRM<VALUE>
 </SACONFIRM>
 { wrapper tags }
```

### 7.10 Invalid Application package

### 7.10.1 Description

This package is sent back from the AIRIX server to the AVM in response to a request to interact with an application that is no longer registered with AIRIX.

### 7.10.2 Structure

An 'invalid application' package has the following structure;

```
 { wrapper tags }
 <NOAPP>
       <VALUE> {data} </VALUE>
 </NOAPP>
 { wrapper tags }
```

### 7.10.3 Tags

### 7.10.3.1 The <NOAPP> tag

The <NOAPP>...</NOAPP> pair delimit the confirmation. The tag has no attributes.

### 7.10.3.2 The <VALUE> tag

The <VALUE>...</VALUE> pair delimit the return code. It can only be NOAPPLICATION - Application not found.

### 7.10.4 Example

This package would be sent in response to a request if the application cannot be found;

```
 { wrapper tags }
 <NOAPP>
       <VALUE>NOAPPLICATION</VALUE>
 </NOAPP>
 { wrapper tags }
```

### 8 APPLICATION-SERVER SYSTEM INTERACTIONS

The section that defines Application to server system interactions has been made obsolete by the document "AIRIX Polling XML Language Specification". It describes an XML-HTTP interface to AIRIX using POST and GET commands to a web-based ISAPI DLL.

### 9 ARML FUTURE DEVELOPMENTS

The following enhancements to ARML are planned;
- Tokenisation
- Support for on-line help
- Compression techniques
- Enhanced editboxes
   o input masks
   o multi-value entry
- Multiple selection list boxes
- A per-application splash screen

## Claims

1. A computer-implemented method comprising:
based at least in part on a first extensible markup language document (50), said first extensible markup language document (50) describing routines (49) for accessing remote application data, generating a second extensible markup language document (44) describing:
an invocation of one of said routines;
data to be passed as a parameter to said one of said routines; and
circumstances in which said invocation is to occur;
wherein said second extensible markup language document (44) comprises at least one markup language element that shall form a basis for instantiating an instance (70) of an object-oriented class (62), said at least one markup language element having attributes that shall form a basis for customizing said instance (70) for performing said invocation, said customizing comprising assigning values of said attributes to data members of said instance that affect said performing of said invocation;
wherein said generating said second extensible markup language document (44) comprises:
presenting a graphical user interface 'GUI' having a selectable option representing said one of said routines;
based in part on user interaction with said selectable option of said GUI, creating said second extensible markup language document (44).

2. The method of claim 1 wherein said generating is performed at a first computing device (40), said customizing and invoking are performed at a second computing device (20), and further comprising downloading said second extensible markup language document (44) from said first computing device (40) to said second computing device (20) prior to said customizing.

3. The method of claim 2 wherein said computing device (20) is a server (20) in communication with both of an application server (12) storing at least one application (14) and a wireless communication device (30).

4. The method of claim 3 wherein said circumstances comprise receipt of a message from said wireless communication devices (30).

5. The method of claim 4 wherein said data to be passed as a parameter comprises a portion of said message and wherein said second extensible markup language document (44) identifies said portion of said message.

6. The method of any one of claims 1 to 5 wherein said selectable option is one of a plurality of selectable options in said GUI, said selectable options enumerating said routines (49) for accessing remote application data as described in said first extensible markup language document (50).

7. The method of any one of claims 1 to 6 wherein said user interaction with said GUI further comprises user creation of a hierarchy of graphical icons (100) using said GUI, each said icon representing an instance of a markup language element of said second extensible markup language document (44).

8. The method of claim 7 wherein said GUI limits permissible containment relationships between the icons of said hierarchy (100) in accordance with permissible containment relationships between the markup language elements represented by said icons as dictated by a markup language schema.

9. The method of any one of claims 1 to 8 wherein said routines (49) comprise methods within object-oriented classes of a dynamically linked library (48), each of said object-oriented classes being identifiable by a qualified name, wherein said first extensible markup language document (50) comprises qualified name information identifying said object-oriented classes, and further comprising using said qualified name information to facilitate said invocation.

10. The method of claim 9 wherein said using said qualified name information to facilitate said invocation comprises using said dynamically linked library (48) to obtain a handle to an instance of one of the object-oriented classes identified by said qualified name information.

11. A machine-readable medium (54) storing code for execution at a computing device (40), comprising:
machine-executable code for generating, based at least in part on a first extensible markup language document (50), said first extensible markup language document (50) describing routines (49) for accessing remote application data, a second extensible markup language document (44) describing:
an invocation of one of said routines;
data to be passed as a parameter to said one of said routines; and
circumstances in which said invocation is to occur
wherein said second extensible markup language document (44) comprises at least one markup language element that shall form a basis for instantiating an instance (70) of an object-oriented class (62), said at least one markup language element having attributes that shall form a basis for customizing said instance (70) for performing said invocation, said customizing comprising assigning values of said attributes to data members of said instance that affect said performing of said invocation; and
wherein said machine-executable code for generating said second extensile markup language document (44) comprises:
machine-executabte code for presenting a graphical user interface 'GUI' having a selectable option representing said one of said routines; and
machine-executable code for creating said second extensible markup language document (44) based in part on user interaction with said selectable option of said GUI.

12. The machine-readable medium (54) of claim 11 wherein said user interaction with said GUI comprises user creation of a hierarchy of graphical icons (100) using said GUI, each said icon representing an instance of a markup language element of said second extensible markup language document (44), wherein said GUI limits permissible containment relationships between the icons of said hierarchy (100) in accordance with permissible containment relationships between the markup language elements represented by said icons as dictated by a markup language schema.

13. The machine-readable medium (54) of claim 11 or claim 12 wherein selectable options of said GUI are determined in part by said first extensible markup language document (50).

14. The machine-readable medium (54) of claim 13 wherein said selectable options enumerate said routines (49) for accessing remote application data.

15. The machine-readable medium (54) of any one of claims 11 to 14 wherein said routines (49) invoke application programming interface routines of an application (14) at a remote application server (12).

16. The machine-readable medium (54) of any one of claims 11 to 15 wherein said routines (49) access said application data directly from a database used by an application at a remote application server for storing said application data.

17. The machine-readable medium of any one of claims 11 to 16 wherein said routines (49) comprise precompiled routines in a dynamically linked library (48).

18. The machine-readable medium (54) of claim 17 wherein said dynamically linked library (48) comprises byte code and wherein said routines (49) comprise methods within object-oriented classes described by said byte code, said object-oriented classes each being identifiable by a qualified name.

19. The machine-readable medium (54) of claim 18 wherein said first extensible markup language document (50) comprises qualified name information identifying said object-oriented classes and further comprising using said qualified name information to facilitate said invocation.

20. The machine-readable medium (54) of claim 19 wherein said using said qualified name information to facilitate said invocation comprises using said dynamically linked library (48) to obtain a handle to an instance of one of the object-oriented classes identified by said qualified name information.

21. A method in a computing device (20), comprising:
instantiating an instance (70) of an object-oriented class (62) in accordance with claim 1.

22. The method of claim 21 wherein said computing device (20) is a server (20) and wherein said circumstances comprise receipt of a message from a wireless communication device (30) in communication with said server (20).

23. The method of claim 22 wherein said data to be passed as a parameter comprises a portion of said message and wherein said extensible markup language document (44) identifies said portion of said message.

24. A machine-readable medium (64) storing code for execution at a computing device (20) for implementing the method of claim 21.

25. The machine-readable medium (64) of claim 24 wherein said computing device (20) is a server (20) and wherein said circumstances comprise receipt of a message from a wireless communication device (30) in communication with said server (20).

26. The machine-readable medium (64) of claim 25 wherein said data to be passed as a parameter comprises a portion of said message and wherein said extensible markup language document (44) identifies said portion of said message.

27. A computing device (40) comprising:
a memory (43) for storing code; and
a processor (41) for executing said code for causing said computing device (40) to perform the steps of the method of any one of claims 1 to 10.

28. A computing device (20) comprising:
a memory (26) for storing code; and
a processor (24) for executing said code for causing said computing device (40) to perform the steps of the method of any one of claims 21 to 23.

## Patentansprüche

1. Computerimplementiertes Verfahren, das aufweist:
basierend zumindest zum Teil auf einem ersten "erweiterbare Auszeichnungssprache (extensible markup language)"-Dokument (50), wobei das "erweiterbare Auszeichnungssprache"-Dokument (50) Routinen (49) beschreibt zum Zugreifen auf entfernte Anwendungsdaten, Erzeugen eines zweiten "erweiterbare Auszeichnungssprache"-Dokuments (44), das beschreibt:
ein Aufrufen der Routinen;
Daten zum Weiterleiten als ein Parameter an die eine der Routinen; und
Umstände, in denen das Aufrufen stattfinden soll;
wobei das zweite "erweiterbare Auszeichnungssprache"-Dokument (44) zumindest ein Auszeichnungssprache(markup language)-Element aufweist, das eine zum Instanziieren einer Instanz (70) einer objektorientierten Klasse (62) bilden soll, wobei das zumindest eine Auszeichnungssprache-Element Attribute hat, die eine Basis bilden sollen zum Anpassen der Instanz (70) zum Durchführen des Aufrufens, wobei das Anpassen aufweist ein Zuweisen von Werten der Attribute zu Datenelementen der Instanz, die das Durchführen des Aufrufens bewirken;
wobei das Erzeugen des zweiten "erweiterbare Auszeichnungssprache"-Dokuments (44) aufweist:
Darstellen einer graphischen Benutzersch nittstelle (GUI - graphical user interface) mit einer auswählbaren Option, die die eine der Routinen repräsentiert;
basierend zum Teil auf einer Benutzerinteraktion mit der auswählbaren Option der GUI, Erzeugen des zweiten "erweiterbare Ausweich-nungssprache"-Dokuments (44).

2. Verfahren gemäß Anspruch 1, wobei das Erzeugen an einer ersten Computervorrichtung (40) durchgeführt wird, wobei das Anpassen und Aufrufen an einer zweiten Computervorrichtung (20) durchgeführt werden, und weiter aufweist ein Herunterladen des zweiten "erweiterbare Auszeichnungssprache"-Dokuments (44) von der ersten Computervorrichtung (40) auf die zweite Computervorrichtung (20) vor dem Anpassen.

3. Verfahren gemäß Anspruch 2, wobei die Computervorrichtung (20) ein Server (20) ist in Kommunikation mit sowohl einem Anwendungsserver (12), der zumindest eine Anwendung (14) speichers, als auch einer drahtlosen Kommunikationsvorrichtung (30).

4. Verfahren gemäß Anspruch 3, wobei die Umstände einen Empfang einer Nachricht von der drahtlosen Kommunikationsvorrichtung (30) aufweisen.

5. Verfahren gemäß Anspruch 4, wobei die Daten, die als ein Parameter weiterzuleiten sind, einen Teil der Nachricht aufweisen und wobei das zweite "erweiterbare Auszeichnungssprache"-Dokument (44) den Teil der Nachricht identifiziert.

6. Verfahren gemäß der Ansprüche 1 bis 5, wobei die auswählbare Option eine aus einer Vielzahl von auswählbaren Optionen in der GUI ist, wobei die auswählbaren Option die Routinen (49) zum Zugreifen auf ent-Anwendungsdaten auszählen, wie in dem ersten "erweiterbare Auszeichnungssprache"-Dokument (50) beschrieben.

7. Verfahren einem der Ansprüche 1 bis 6, wobei die Benutzerinteraktion mit der GUI aufweist eine Erzeugung, durch einen Benutzer, einer Hierarchie von graphischen Icons bzw. Symbolen (100) unter Verwendung der GUI, wobei jedes Symbol eine Instanz eines Auszeichnungssprache-Elements des zweiten "erweiterbare Auszeichnungssprache"-Dokuments (44) repräsentiert.

8. Verfahren gemäß Anspruch 7, wobei die GUI zulässige Enthaltenseins-Beziehungen zwischen den Symbolen der Hierarchie (100) begrenzt in Übereinstimmung mit zulässigen Enthaltenseins-Beziehungen zwischen den Auszeichnungssprache-Elementen, die durch die Symbole repräsentiert werden, wie von einem Auszeichnungssprache-Schema vorgegeben.

9. Verfahren gemäß einem der Ansprüche 1 bis 8, wobei die Routinen (49) Verfahren in objektorientierten Klassen einer dynamisch-verlinkten Bibliothek (48) aufweisen, wobei jede der objektorientierten Klassen durch einen qualifizierten Namen identifiziert werden kann, wobei das erste "erweiterbare Auszeichnungssprache"-Dokument (50) eine qualifizierte Namensinformation aufweist, die die objektorientierten Klassen identifiziert, und weiter aufweist ein Verwenden der qualifizierten Namensinformation, um das Aufrufen zu erleichtern.

10. Verfahren gemäß Anspruch 9, wobei das Verwenden der qualifizierten Namensinformation, um das Aufrufen zu erleichtern, ein Verwenden der dynamisch-verlinkten Bibliothek (48) aufweist, um ein Handle zu einer Instanz einer der objektorientierten Klassen zu erlangen, die durch die qualifizierte Namensinformation identifiziert wird.

11. Maschinenlesbares Medium (54), das Code speichert zur Ausführung auf einer Computervorrichtung (40), das aufweist:
maschinenausführbaren Code zum Erzeugen, basierend zumindest zum Teil auf einem "erweiterbare Auszeichnungssprache"-Dokument (50), wobei das erste "erweiterbare Auszeichnungssprache"-Dokument (50) Routinen (49) beschreibt zum Zugreifen auf entfernte Anwendungsdaten, eines zweiten "erweiterbare Auszeichnungssprache"-Dokuments (44), das beschreibt:
ein Aufrufen einer der Routinen;
Daten zum Weiterleiten als ein Parameter an die eine der Routinen; und
Umstände, in denen das Aufrufen stattfinden soll;
wobei das zweite "erweiterbare Auszeichnungssprache"-Dokument (44) zumindest ein Auszeichn ungssprache(marku p language)-Element aufweist, das eine Basis zum Instanziieren einer Instanz (70) einer objektorientierten Klasse (62) bilden soll, das zumindest eine Auszeichnungssprache-Element Attribute hat, die eine bilden sollen zum Anpassen der Instanz (70) zum Durchführen des Aufrufens, wobei das Anpassen aufweiset ein Zuweisen von Werten der Attribute zu Datenelementen der Instanz, die das Durchführen des Aufrufens bewirken; und
wobei der maschinenausführbare Code zum Erzeugen des zweiten "erweiterbare Auszeichnungssprache"-Dokuments (44) aufweist:
maschinenausführbaren Code zum Darstellen einer graphischen Benutzerschnittstelle (GUI graphical user interface) mit einer auswählbaren Option, die die eine der Routinen repräsentiert; und
maschinenausführbaren Code zum Erzeugen des zweiten "erweiterbare Auszeichnungssprache"-Dokuments (44) basierend zum Teil auf einer Benutzerinteraktion mit der auswählbaren Option der GUI.

12. Maschinenlesbares Medium (54) gemäß Anspruch 11, wobei die Benutzerinteraktion mit der GUI aufweiset eine Erzeugung, durch einen Benutzter, einer Hierarchie von graphischen Icons bzw. Symbolen (100) unter Verwendung der GUI, wobei jedes Symbol eine Instanz eines Auszeichnungssprache-Elements des zweiten "erweiterbare Auszeichnungssprache"-Dokuments (44) repräsentiert, wobei die GUI zulässige Enthaltenseins-Beziehungen zwischen den Symbolen der Hierarchie (100) begrenzt in Übereinstimmung mit zulässigen Enthaltenseins-Beziehungen zwischen den Auszeichnungssprache-Elementen, die durch die Symbole repräsentiert werden, wie von einem Auszeichnungssprache-Schema vorgegeben.

13. Maschineniesbares Medium (54) gemäß Anspruch 11 oder Anspruch 12, wobei auswählbare Optionen der GUI zum Teil durch das erste "erweiterbare Auszeichnungssprache"-Dokument (50) bestimmt werden.

14. Maschinenlesbares Medium (54) gemäß Anspruch 13, wobei die auswählbaren Optionen die Routinen (49) zum Zugreifen auf entfernte Anwendungsdaten auszählen.

15. Maschinenlesbares Medium (54) gemäß einem der Ansprüche 11 bis 14, wobei die Routinen (49) Anwendungsprogrammierschnittstelle-Routinen einer Anwendung (14) an einem entfernten Anwendungsserver (12) aufrufen.

16. Maschinenlesbares Medium (54) gemäß einem der Ansprüche 11 bis 15, wobei die Routinen (49) auf die Anwendungsdaten direkt von einer Datenbank zugreifen, die von einer Anwendung an einem entfernten Anwendungsserver verwendet wird zum Speichern der Anwendungsdaten.

17. Maschinenlesbares Medium gemäß einem der Ansprüche 11 bis 16, wobei die Routinen (49) vorkompilierte Routinen in einer dynamisch-verlinkten Bibliothek (48) aufweisen.

18. Maschinenlesbares Medium (54) gemäß Anspruch 17, wobei die dynamisch-verlinkte Bibliothek (48) Byte-Code aufweist und wobei die Routinen (49) Verfahren in objektorientierten Klassen aufweisen, die von dem Byte-Code beschrieben werden, wobei die objektorientierten Klassen jeweils durch einen qualifizierten Namen identifiziert werden können.

19. Maschinenlesbares Medium (54) gemäß Anspruch 18, wobei das erste "erweiterbare Auszeichnungssprache"-Dokument (50) eine qualifizierte Namensinformation aufweist, die die objektorientierten Klassen identifiziert, und weiter ein Verwenden der qualifizierten Namensinformation aufweist, um das Aufrufen zu erleichtern.

20. Maschinenlesbares Medium (54) gemäß Anspruch 19, wobei das Verwenden der qualifizierten Namensinformation, um das Aufrufen zu erleichtern, aufweist ein Verwenden der dynamisch-verlinkten Bibliothek (48), um ein Handle zu einer Instanz einer der objektorientierten Klassen zu erlangen, die durch die qualifizierte Namensinformation identifiziert wird.

21. Verfahren in einer Computervorrichtung (20), das aufweist:
Instanziieren einer Instanz (70) einer objektorientierten Klasse (62) in Übereinstimmung mit Anspruch 1.

22. Verfahren gemäß Anspruch 21, wobei die Computervorrichtung (20) ein Server (20) ist und wobei die Umstände einen Empfang einer Nachricht von einer drahtlosen Kommunikationsvorrichtung (30) in Kommunikation mit dem Server (20) aufweisen.

23. Verfahren Anspruch 22, wobei die Daten, die als ein Parameter weiterzuleiten sind, einen Teil der Nachricht und wobei das "erweiterbare Auszeichnungssprache"-Dokument (44) den Teil der Nachricht identifiziert.

24. Maschinelesbares Medium (64), das Code speichert zur Ausführung an einer Computervorrichtung (20) zum Implementieren des Verfahrens gemäß Anspruch 21.

25. Maschinenlesbares Medium (64) gemäß Anspruch 24, wobei die Computervorrichtung (20) ein Server (20) ist und wobei die Umstände einen Empfang einer Nachricht von einer drahtlosen Kommunikationsvorrichtung (30) in Kommunikation mit dem Server (20) aufweisen.

26. Maschinenlesbares Medium (64) gemäß Anspruch 25, wobei die Daten, die als ein Parameter weiterzuleiten sind, einen Teil der Nachricht aufweisen und wobei "erweiterbare Auszeichnungssprache"-Dokument (44) den Teil der Nachricht identifiziert.

27. Computervorrichtung (40), die aufweist:
einen Speicher (43) zum Speichern von Code; und
einen Prozessor (41) zum Ausführen des Codes, um die Computervorrichtung (40) zu veranlassen, die Schritte des Verfahrens gemäß einem der Ansprüche 1 bis 10 durchzuführen.

28. Computervorrichtung (20), die aufweist:
einen Speicher (26) zum Speichern von Code; und
einen Prozessor (24) zum Ausführen des Codes, um die Computervorrichtung (40) zu veranlassen, die Schritte des Verfahrens gemäß einem der Ansprüche 21 bis 23 durchzuführen.

## Revendications

1. Procédé, mis en oeuvre sur ordinateur, comprenant les étapes consistant à :
en fonction au moins en partie d'un premier document dans un langage de balisage extensible (50), ledit premier document dans un langage de balisage extensible (50) décrivant des routines (49) destinées à accéder à des données distantes dune application, produire un second document dans un langage de balisage extensible (44) qui décrit :
un appel de l'une desdites routines ;
des données à passer comme paramètres de ladite une desdites routines ; et
des circonstances dans lesquelles ledit appel doit se produire ;
dans lequel ledit second document dans un langage de balisage extensible (44) comprend au moins un élément de langage de balisage extensible qui doit constituer une base pour l'instanciation d'une instance (70) d'une classe orientée objets (62), ledit au moins un élément du langage de balisage extensible possédant des attributs qui doivent former une base pour la personnalisation de ladite instance (70) afin de réaliser ledit appel, ladite personnalisation comprenant l'attribution de valeurs desdits attributs à des éléments de données de ladite instance qui affectent l'exécution dudit appel ;
dans lequel ladite étape de production dudit second document dans un langage de balisage extensible (44) comprend les étapes consistant à :
présenter une interface utilisateur graphique offrant une option à sélectionner qui représente ladite une des routines ;
en fonction en partie de l'interaction de l'utilisateur avec ladite option à sélectionner dans ladite interface utilisateur graphique, créer ledit second document dans un langage de balisage extensible (44).

2. Procédé selon la revendication 1, dans lequel ladite étape de production est exécutée sur un premier dispositif informatique (40), lesdites étapes de personnalisation et d'appel sont exécutées sur un second dispositif informatique (20) et comprennent en outre le téléchargement dudit second document dans un langage de balisage extensible (44) entre ledit premier dispositif informatique (40) et ledit second dispositif informatique (20), avant ladite étape de personnalisation.

3. Procédé selon la revendication 2, dans lequel ledit second dispositif informatique (20) est un serveur (20) en communication avec à la fois un serveur d'applications (12) stockant au moins une application (14) et un dispositif de communication sans fil (30).

4. Procédé selon la revendication 3, dans lequel lesdites circonstances comprennent la réception d'un message dudit dispositif de communication sans fil (30).

5. Procédé selon la revendication 4, dans lequel lesdites données à passer comme paramètres comprennent une partie dudit message et dans lequel ledit second document dans un langage de balisage extensible (44) identifie ladite partie dudit message.

6. Procédé selon l'une quelconque des revendications 1 à 5, dans lequel ladite option à sélectionner est une option parmi une pluralité d'options à sélectionner dans ladite interface utilisateur graphique, lesdites options à sélectionner énumérant lesdites routines (49) destinées à accéder à des données distantes de l'application qui sont décrites dans ledit premier document dans un langage de balisage extensible (50).

7. Procédé selon l'une quelconque des revendications 1 à 6, dans lequel ladite interaction de l'utilisateur avec ladite interface utilisateur graphique comprend en outre la création par l'utilisateur d'une hiérarchie d'icônes graphiques (100) à l'aide de ladite interface utilisateur graphique, chacune desdites icônes représentant une instante d'un élément du langage de balisage dans ledit second document dans un langage de balivage extensible (44).

8. Procédé selon la revendication 7, dans lequel ladite Interface utilisateur graphique limite les relations d'inclusion autorisées entre les icônes de ladite hiérarchie (100) en fonction de relations d'inclusion autorisées entre les éléments du langage de balivage représentés par lesdites icônes, comme l'indique le schéma du langage de balivage.

9. Procédé selon l'une quelconque des revendications 1 à 8, dans lequel lesdites routines (49) comprennent des méthodes au sein de classes orientées objets d'une bibliothèque liée dynamiquement (48), chacune lesdites classes orientées objets pouvant être identifiée par un nom qualifié, dans lequel ledit premier document dans un langage de balivage extensible (50) comprend des informations de noms qualifiés qui identifient lesdites classes orientées objets, et comprenant en outre l'étape consistant à utiliser lesdites informations de noms qualifiés pour faciliter ledit appel.

10. Procédé selon la revendication 9, dans lequel ladite étape d'utilisation desdites informations de noms qualifiés pour faciliter ledit appel comprend l'étape consistant à utiliser ladite bibliothèque liée dynamiquement (48) pour obtenir une référence à l'une des classes orientées objets qui est identifiée par desdites informations de noms qualifiés.

11. Support lisible par une machine (54), stockant du code destiné à être exécuté sur un dispositif informatique (40), comprenant :
du code exécutable par une machine, destiné à produire, en fonction au moins en partie d'un premier document dans un langage de balisage extensible (50), ledit premier document dans un langage de balisage extensible (50) décrivant des routines (49) destinées à accéder à des données distantes d'une application, un second document dans un langage de balisage extensible (44) qui décrit :
un appel de l'une desdites routines ;
des données à passer comme paramètres de ladite une desdites routines ; et
des circonstances dans lesquelles ledit appel doit se produire ;
dans lequel ledit second document dans un langage de balisage extensible (44) comprend au moins un élément de langage de balisage extensible qui doit constituer une base pour l'instanciation d'une instance (70) d'une classe orientée objets (62), ledit au moins un élément du langage de balisage extensible possédant des attributs qui doivent former une base pour la personnalisation de ladite instance (70) afin de réaliser ledit appel, ladite personnalisation comprenant l'attribution de valeurs desdits attributs à des éléments de données de ladite instance qui affectent l'exécution dudit appel ; et
dans lequel ledit code exécutable par une machine pour la production dudit second document dans un langage de balisage extensible (44) comprend :
du code exécutable par une machine pour présenter une interface utilisateur graphique offrant une option à sélectionner qui représente ladite une des routines ; et
du code exécutable par une machine pour créer ledit second document dans un langage de balisage extensible (44), en fonction en partie de l'interaction de l'utilisateur avec ladite option à sélectionner dans ladite interface utilisateur graphique.

12. Support lisible par une machine (54) selon la revendication 11, dans lequel ladite interaction de l'utilisateur avec ladite interface utilisateur graphique comprend la création par l'utilisateur d'une hiérarchie d'icônes graphiques (100) à l'aide de ladite interface utilisateur graphique, chacune desdites icônes représentant une instance d'un élément du langage de balisage dans ledit second document dans un langage de balisage extensible (44), dans lequel ladite interface utilisateur graphique limite les relations d'inclusion autorisées entre les icônes de ladite hiérarchie (100) en fonction de relations d'inclusion autorisées entre les éléments du langage de balisage représentés par lesdites icônes, comme l'indique un schéma du langage de balisage.

13. Support lisible par une machine (54) selon la revendication 11 ou la revendication 12, dans lequel des options à sélectionner dans ladite interface utilisateur graphique sont déterminées en partie par ledit premier document dans un langage de balisage extensible (50).

14. Support lisible par une machine (54) selon la revendication 13, dans lequel lesdites options à sélectionner énumèrent lesdites routines (49) destinées à accéder aux données distantes de l'application.

15. Support lisible par une machine (54) selon l'une quelconque des revendications 11 à 14, dans lequel lesdites routines (49) appellent des routines d'une interface de programmation d'applications, pour une application (14) se trouvant sur un serveur d'applications (12) distant.

16. Support lisible par une machine (54) selon l'une quelconque des revendications 11 à 15, dans lequel lesdites routines (49) accèdent auxdites données de l'application directement sur une base de données utilisée par une application, sur un serveur d'applications distant, pour stocker lesdites données d'application.

17. Support lisible par une machine (54) selon l'une quelconque des revendications 11 à 16, dans lequel lesdites routines (49) comprennent des routines précompilées dans une bibliothèque liée dynamiquement (48).

18. Support lisible par une machine (54) selon la revendication 17, dans lequel ladite bibliothèque liée dynamiquement (48) comprend du code intermédiaire et dans lequel lesdites routines (49) comprennent des méthodes au sein de classes orientées objets qui sont décrites par ledit code intermédiaire, chacune desdites classes orientées objets pouvant être identifiée par un nom qualifié.

19. Support lisible par une machine (54) selon la revendication 18, dans lequel ledit premier document dans un langage de balisage extensible (50) comprend des informations de noms qualifiés qui identifient lesdites classes orientées objets et comprenant en outre l'étape consistant à utiliser lesdites informations de noms qualifiés pour faciliter ledit appel.

20. Support lisible par une machine (54) selon la revendication 19, dans lequel ladite étape d'utilisation desdites informations de noms qualifiés pour faciliter ledit appel comprend l'étape consistant à utiliser ladite bibliothèque liée dynamiquement (48) pour obtenir une référence à l'une des classes orientées objets qui est identifiée par lesdites informations de noms qualifiés.

21. Procédé exécuté sur un dispositif informatique (20), comprenant l'étape consistant à :
instancier une instance (70) d'une classe orientée objets (62) selon la revendication 1.

22. Procédé selon la revendication 21, dans lequel ledit dispositif informatique (20) est un serveur (20) et dans lequel lesdites circonstances comprennent la réception d'un message en provenance d'un dispositif de communication sans fil (30) en communication avec ledit serveur (20).

23. Procédé selon la revendication 22, dans lequel lesdites données à passer comme paramètres comprennent une partie dudit message et dans lequel ledit second document dans un langage de balisage extensible (44) identifie ladite partie dudit message.

24. Support lisible par une machine (64), stockant du code destiné à être exécuté sur un dispositif informatique (20) afin de mettre en oeuvre le procédé selon la revendication 21.

25. Support lisible par une machine (64) selon la revendication 24, dans lequel ledit dispositif informatique (20) est un serveur (20) et dans lequel lesdites circonstances comprennent la réception d'un message en provenance d'un dispositif de communication sans fil (30) en communication avec ledit serveur (20).

26. Support lisible par une machine (64) selon la revendication 25, dans lequel lesdites données à passer comme paramètres comprennent une partie dudit message et dans lequel ledit second document dans un langage de balisage extensible (44) identifie ladite partie dudit message.

27. Dispositif informatique (40), comprenant :
une mémoire (43) destinée à stocker du code ; et
un processeur (41) destiné à exécuter ledit code afin de commander audit dispositif informatique (40) d'exécuter les étapes du procédé selon l'une quelconque des revendications 1 à 10.

28. Dispositif informatique (20), comprenant :
une mémoire (26) destinée à stocker du code ; et
un processeur (24) destiné à exécuter ledit code afin de commander audit dispositif informatique (40) d'exécuter les étapes du procédé selon l'une quelconque des revendications 21 à 23.
